# EUROPEAN PATENT SPECIFICATION

(11) **EP 0 564 049 B1**
(45) Date of publication and mention of the grant of the patent: **24.10.2001**
(21) Application number: 93200947.5
(22) Date of filing: 02.04.1993
(51) Int. Cl.: C08F 8/00

(54) **Process for making hydroxyl functional derivatives of epoxidized diene block copolymers**
Verfahren zur Herstellung von Hydroxylfunktionen enthaltenden Derivaten von epoxidierten Dien-Blockcopolymeren
Procédé de préparation de dérivés hydroxylés de copolymères séquencés de dienes époxidés

(30) Priority: 03.04.1992 US 863648; 03.04.1992 US 863580
(43) Date of publication of application: 06.10.1993
(73) Proprietor: SHELL INTERNATIONALE RESEARCH MAATSCHAPPIJ B.V., 2596 HR Den Haag (NL)
(72) Inventor: Bening, Robert Charles, Katy, Texas 77450 (US); St. Clair, David John, Houston, Texas 77079 (US); Flores, Joe Jerry, Sugarland, Texas 77479 (US); Erickson, James Robert, Katy, Texas 77450 (US); Gibler, Carma Joleen, Houston, Texas 77079 (US); Stark, Charles John, Houston, Texas 77095 (US)
(74) Representative: Kortekaas, Marcellinus C. J. A.

(56) References cited:
- EP-A- 0 387 947
- WO-A-90/08787
- US-A- 3 135 716
- US-A- 4 051 199
- US-A- 5 002 676

## Description

This invention relates to a process for making elastomeric block polymers of conjugated dienes which contain alcohol units in the diene blocks. from epoxidized diene block polymers.

Conventional A-B-A block copolymers are known to be useful in coatings, sealants, adhesives and modified asphalts but their usefulness in such products is not as great as it could be if these polymers did not suffer from deficiencies in certain physical properties. For instance, U.S. Patent 3,792,005 disclosed that coatings can be made using block polymers of A-B-A type where A is a monovinyl aromatic polymer block, usually polystyrene (S), and B is a rubber polymer block, usually hydrogenated polybutadiene (EB) or hydrogenated polyisoprene (EP). These polymers could be specially useful in elastomeric coatings because they can be formulated to have good flexibility and therefore, will not crack during thermal cycling, an important requirement for roof coatings, for example, or during metal forming, where the coating becomes stretched as the metal is bent. However, coatings based on conventional A-B-A type block copolymers are deficient in that they lack strong adhesion and in applications in which the coating will contact organic liquids such as gasoline, or high temperatures; the coatings merely dissolve or melt off of the substrate.

It would be advantageous to provide block polymers of this type which had enhanced physical properties. By functionalizing these conventional block polymers, they can be crosslinked to give polyurethane structures which will have better physical properties and thus be more useful than the conventional block polymers in many coatings, sealants, adhesives and modified asphalts.

The known curable or crosslinked coatings which are based on vinyl aromatics and conjugated dienes do not have particularly good long term heat, weather and ultraviolet stability due to the need to utilize unhydrogenated polymers (it is difficult to add functional groups without using unhydrogenated polymers). Hydrogenation is known to improve long term heat, weather and ultraviolet stability, but it removes the double bonds which are needed to add functional groups which can be crosslinked.

It is an object of the present invention to provide a process for making such block polymers, which process achieves high conversion in relatively short reaction time to a well defined product under mild conditions. In the past, strong mineral acids, such as perchloric acid, have been used to react epoxidized polymers such as disclosed in U.S. Patents 3,555,112, 3,607,977 and 3,607,982. However, the use of perchloric acid is undesirable because it forms explosive compounds. Special facilities must be provided to handle the acid in its concentrated form. The reaction times required to achieve reasonable conversion also tend to be relatively long (the examples specify reaction times in the order of six hours). These examples are also limited to polymers which possess high levels of epoxy functionality. It is not clear whether or not these conditions could result in substantial amounts of alcohol functionality when applied to polymers possessing relatively low levels of epoxy functionality.

Protic acid and Lewis acid catalysts have also been used to react epoxidized polymers such as disclosed in U.S. Patent 5,015,697. However, protic acid catalysts such as sulphuric acid generally require long reaction times, while many Lewis acid catalysts lead to side reactions such as ketone or aldehyde formation. Gel formation and discoloration have also been problems in these systems. It would be advantageous to provide a process for making hydroxyl functional derivatives of epoxidized diene block polymers under mild conditions whereby these problems are avoided.

International Patent Specification No. WO-A-9008787 discloses the use of Lewis acid catalysts such as FeCl₃ as an alternative to perchloric acid to convert polybutenes with epoxy groups having 70% trisubstitution and 20% tetra substitution, to hydroxyethers; however still the reaction times are long (eg 3 hours) and a discoloured product resulted when a monofunctional alcohol reagent was used.

European Patent Specifications Nos. 387947A and 441485A disclose techniques for the hydrogenation of block copolymers.

It would also be advantageous for this process to result in substantial conversion at reaction times in the order of one hour. Further, it would be advantageous to demonstrate that these conditions are applicable to hydrogenated diene block copolymers which contain epoxy groups. The present invention provides such a means by opening the hindered epoxy rings of a hydrogenated diene block copolymer to introduce reactive hydroxyl functionality to the polymer backbone.

The present invention provides a process for making elastomeric block polymers of conjugated dienes which contain hydroxyl functionality in the diene blocks capable of reacting with curing agents, such as amino resins and isocyanates. Preferably, the final products are substantially free of residual unsaturation. The process comprises the steps of:
(a) making a precursor polymer by polymerizing at least one conjugated diene which leaves 1,2 disubstituted, 1,1 disubstituted, 1,1,2 trisubstituted or tetrasubstituted olefinic unsaturation in the polymer,
(b) epoxidizing said precursor polymer such that epoxy groups form at said substituted sites and the amount of epoxy functionality in the polymer is at least 0.1 meq/g polymer, and
(c) contacting the epoxidized polymer with an alcohol having one unprotected hydroxyl group and either HX or a compound or organic complex of general formula MXₙ, wherein M is selected from the group consisting of boron, aluminium, iron and tin; X is a halogen; and n is an integer corresponding with the valence of M, or an organic complex thereof.

In one of the preferred embodiments of this process in step (c) the epoxidized polymer is contacted with an alcohol having one unprotected hydroxyl group in a solvent in the presence of a catalyst selected from the group consisting of Lewis acids of the formula MXₙ where M is a metal selected from the group consisting of boron, aluminium, iron and tin; X is a halogen, and n is an integer corresponding with the valence of the metal M, and organic complexes of such Lewis acids.

With the term "1,2 disubstituted olefinic unsaturation" is meant a structure like (A). Similarly, the terms "1,1 disubstituted olefinic unsaturation", "1,1,2 trisubstituted olefinic unsaturation" and "tetrasubstituted unsaturation" refer to the structures (B), (C) and (D) respectively.

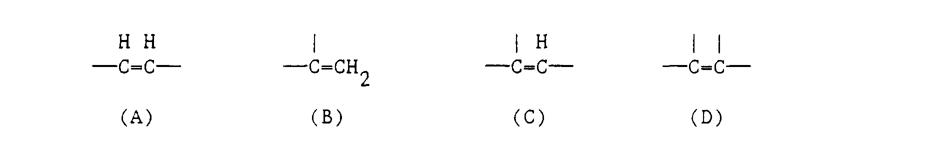

With the abbreviation "meq/g polymer" as used throughout this specification is meant milliequivalents per gram of polymer.

In a preferred embodiment, the conjugated dienes described above are copolymerized, either randomly, or in blocks, with conjugated diene monomers that leave only vinyl or 1,2 disubstituted olefinic sites. These sites are hydrogenated, either before or after epoxidation, such that the final epoxidized product contains at least 0.1 and preferably 0.1 to 5 meq/g of polymer of epoxy groups and less than 1, preferably less than 0.6 and most preferably less than 0.3 milliequivalent of residual olefin per gram of polymer (meq/g.) In the most preferred embodiment of this invention, polymerization is carried out such that 0.3 to 3.5 meq/g polymer of disubstituted, trisubstituted or tetrasubstituted olefin is present in the precursor polymer, substantially all of the vinyl and most of the 1,2 disubstituted olefins are consumed by partial hydrogenated and epoxidation is carried out to consume the remaining olefins such that no more than 0.3 meq/g polymer of unsaturation remains in the epoxidized polymer.

It is preferred that in the event the compound MXₙ serves as the catalyst, this catalyst is selected from the group consisting of organic complexes of boron trifluoride particularly boron trifluoride diethyl etherate, boron trifluoride dibutyl etherate, boron trifluoride dimethyl etherate or boron trifluoride t-butyl methyl etherate. It is preferred that the alcohol having one unprotected hydroxyl group is selected from the group consisting of monohydric alcohols, and derivatives of dihydric and trihydric alcohols having one unprotected hydroxyl group, the remaining hydroxyl groups being protected as the acetal, ketal or carbonate. Preferred examples of such compounds are butanol, octanol, Solketal and trimethylolpropane ketal (the acetone ketal of trimethylolpropane).

The polymer of the present invention is a conjugated diene polymer containing 0.1 to 15 meq/g polymer of hydroxyl groups, which may include highly reactive primary hydroxyl groups, in the diene blocks. The polymer is comprised of alcohol groups of the formula 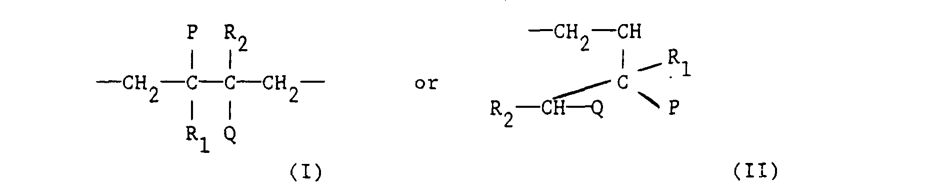 wherein P is -OH, -Cl or -OR with R being selected from the group consisting of alkyl radicals containing up to 10 carbon atoms, monohydric and dihydric alcohol groups and carbonate groups; Q is -OH or Cl with the proviso that at least one of P and Q is -OH and R₁ and R₂ are hydrogen or alkyl radicals with the proviso that if X is -OR only one of R₁ and R₂ can be hydrogen.

In the specific case wherein P is -OR and Q is -OH, the block copolymer of the present invention is comprised of ether alcohol groups of the formula 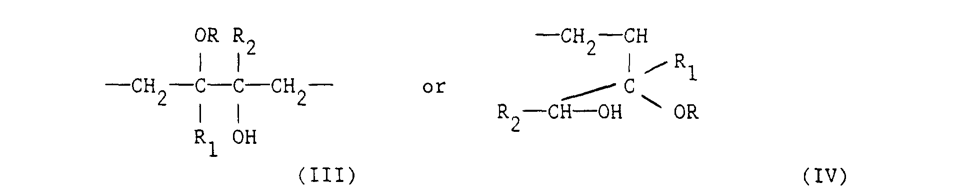 with R, R₁ and R₂ as defined above.

The polymer may also contain (a) hydrogenated diene monomer(s) which may be the diene monomers from which the alcohol units were derived or another diene monomer, (b) epoxidized diene monomer(s) and/or (c) residual olefin. In the preferred embodiment, the total residual olefin is less than 1, preferably less than 0.6 and most preferably less than 0.3 meq/g polymer.

In a preferred embodiment, sufficient alcohol is present such that 0.25 to 9 meq/g polymer of hydroxyl groups are present. In the case of (III) and (IV) it is preferred that at least 1/3 of the hydroxyl groups are primary and present as part of the ether radical (OR). In another embodiment of the invention, hydrogenation products of a diene monomer that polymerizes to give only vinyl or 1,2 disubstituted olefin residue may also be present in the polymer. In yet another embodiment of the invention, the polymer or an individual block of the polymer may contain up to 75% randomly-distributed monoalkenyl aromatic hydrocarbon monomer residues. The amount of such alkyl aryl monomers in an individual block of the polymer can be as high as 99% provided that sufficient conjugated diene monomer is used to give the required number of epoxidations sites.

The conjugated diene block polymers prepared by the process of the present invention should contain at least 0.1 meq/g polymer of hydroxyl groups.

If less than 0.1 meq/g polymer of hydroxyl groups are present, there is insufficient functionality to achieve the advantages of the invention, while the presence of more than 15 meq/g may cause the polymer to be too water soluble and brittle after cure. A range of 0.25 to 9 meq/g is preferred.

A preferred type of polymer within the scope of the present invention is a conjugated diene block copolymer containing hydroxyl functionality, which may include highly reactive primary hydroxyl groups, in the diene blocks and having the formula

C_{q}-Yₚ-(Bₓ-A)ᵣ (V)

where B is a block comprising hydrogenated conjugated diene, preferably butadiene, derived repeat units and x is 0 or 1. The B block may also contain low levels of epoxidized, alcohol and/or unsaturated repeat units, with the proviso that no more than 1, preferably 0.6 and most preferably 0.3, meq/g polymer of unsaturated double bonds is present in the polymer - all the B blocks described hereafter may also contain such units. A is a polymer block comprising alcohol units of formula (I) or (II) thus also including the ether-alcohol units of formula (III) or (IV). The R radical groups may contain hydroxyl groups, one or both of which may be primary. The A block may also contain hydrogenated or epoxidized and/or unsaturated repeat units such that no more than 1, preferably 0.6 and most preferably 0.3, meq/g polymer of unsaturated double bonds remains in the polymer (all the A blocks described hereafter may contain such units). C is either the same as A or B or is a polymer block derived from an acrylate or methacrylate monomer, and Y is the residue of a coupling agent, the residue of an initiator or a polymer block derived from coupling monomers such as e.g. divinyl benzene. As already stated before, from 0.1 to 15 meq/g polymer, preferably 0.25 to 9 meq/g, of hydroxyl groups are present in the polymer, preferably at least 1/3 of which are highly reactive primary alcohol groups. As to the integers q, p and r, it applies that r > 0, q ≥ 0, r + q is from 1 to 100 and p is 0 or 1.

Another preferred type of polymer within the scope of the present invention has the formula

S_{z} - A - S_{z}, (VI)

wherein S is a block consisting of monoalkenyl aromatic hydrocarbon and z and z' are 0 or 1. A is a polymer block comprising alcohol units of formula (I) or (II). Again, the ether-alcohol units of formula (III) or (IV) are also included. In addition, A may also contain epoxidized diene monomer, hydrogenated diene monomer which may be a different diene monomer than that from which the alcohol units are derived, monoalkenyl aromatic hydrocarbon and unhydrogenated diene monomer residues as described previously. Alcohol units are present in an amount such that 0.1 to 15 meq/g polymer, preferably from 0.25 to 9 meq/g, of hydroxyl groups are present in the polymer, most preferably at least 1/3 of which are highly reactive primary groups. In a preferred embodiment of this invention, the A block consists of a copolymer of isoprene and butadiene and the majority of alcohol units are derived from isoprene.

Also included herein are block polymers of the formula

S_{z}-A-S_{z}, (VII)

wherein S and A are as described in the preceding paragraph but the blocks are not hydrogenated. Another unhydrogenated polymer which falls within the scope of the present invention has the formula

C_{q}Yₚ-(Bₓ-A)ᵣ (VIII)

wherein B is a polymer block derived from a conjugated diene and A is a polymer block which contains a higher concentration of alcohol units than B. The rest of the terms are as described in formula (V) above. For all of the polymers above, it is preferred that at least 1/3 of the hydroxyl groups be primary hydroxyl groups, that B be derived from butadiene and A be derived from isoprene, that the amount of hydroxyl groups range from 0.25 to 9 meq/g polymer. In another embodiment, the polymer contains up to 75% by weight of the polymer of a vinyl aromatic hydrocarbon.

The molecular weights of these polymers generally range from 2 X 10³ to 5 X 10⁶. The molecular weights of the A blocks generally range from 100 to 50,000, with 500 to 15,000 being most preferred. The molecular weights of the B blocks generally range from 100 to 200,000, with 13,000 to 50,000 being most preferred. The molecular weights of the C blocks generally range from 50 to 100,000, with 500 to 50,000 being most preferred. The molecular weight of the S blocks generally range from 100 to 50,000. In order to produce polymers having these molecular weights, the precursor polymers must be made so that the molecular weights thereof are similar. Some higher molecular weight species formed by coupling during the reaction with alcohol or hydrochloric acid may also be present.

Molecular weights of linear polymers or uncoupled linear segments of polymers such as mono-, di-, triblock, and etc., or arms of star polymers before coupling are conveniently measured by Gel Permeation Chromatography (GPC), where the GPC system has been appropriately calibrated. Polymers of known molecular weight are used to calibrate and these must be of the same molecular structure and chemical composition as the unknown linear polymers or segments that are to be measured. For anionically polymerized linear polymers, the polymer is essentially monodisperse and it is both convenient and adequately descriptive to report the "peak" molecular weight of the narrow molecular weight distribution observed. Measurement of the true molecular weight of the final coupled star polymer is not as straightforward or as easy to make using GPC. This is because the star shaped molecules do not separate and elute through the packed GPC columns in the same manner as do the linear polymers used for the calibration, and, hence, the time of arrival at a UV or refractive index detector is not a good indicator of the molecular weight. A good method to use for a star polymer is to measure the weight average molecular weight by light scattering techniques. The sample is dissolved in a suitable solvent at a concentration less than 1.0 gram of sample per 100 millilitres of solvent and filtered using a syringe and porous membrane filters of less than 0.5 microns pore size directly into the light scattering cell. The light scattering measurements are performed as a function of scattering angle and of polymer concentration using standard procedures. The differential refractive index (DRI) of the sample is measured at the same wavelength and in the same solvent used for the light scattering. The following references describe the before-mentioned methods:
1. Modern Size-Exclusion Liquid Chromatography, M. W. Yau, J. J. Kirkland, D. D. Bly, John Wiley & Sons, New York, NY, 1979.
2. Light Scattering from Polymer Solutions, M. B. Huglin, ed., Academic Press, New York, NY 1972.
3. W. Kay and A. J. Havlik, Applied Optics, 12, 541 (1973).
4. M. L. McConnell, American Laboratory, 63, May, 1978.

The block copolymers prepared by the process of the invention are intended for uses requiring functionality to add polarity and reactivity to the unfunctionalized molecules. In particular, these molecules are intended as rubber modifiers and vehicle constituents in coatings and sealants, especially polyurethane coatings and sealants. These products are useful in thermoset adhesives, sealants and coatings, especially the urethanes, polyesters and melamine-curing products. The polymers prepared by the process of the invention are also useful in asphalt modification where polarity is desirable. They are useful in fibers, films and printing plates, as well as for the modification of polyesters, polyethers and polyamides. The introduction of long hydrocarbon chains (by reaction with n-alcohols) is useful in preparing low T_{g} saturated midblock polymers and pour point depressant viscosity index improvers. Reaction of these hydroxyl group-containing polymers with molecules containing electrophilic functional groups such as isocyanates, acid chlorides, carboxylic acids, etc., can be used to introduce new functionality to the polymer backbone. For example, acrylate groups can be introduced by reaction with methacrylic acid and isocyanate groups by reaction with excess toluene diisocyanate.

The polymers prepared by the process of the present invention are especially useful in coatings. Preferably, these polymers are crosslinked with isocyanate to create excellent coating materials. Isocyanate is used to crosslink the polymers via reaction with the hydroxyl functionality present in the polymer. Standard polyurethane chemistry is utilized for the reaction of the polymer with the isocyanate. For example, see "Coatings Based on Polyurethane Chemistry: An Overview and Recent Developments" by T. A. Potter and J. L. Williams, Journal of Coatings Technology, Vol. 59, No. 749, June 1987, pps. 63-72.

Monomeric isocyanates can be used for the crosslinking of functionalized polymers. Monomeric isocyanates suffer from the disadvantage that they are highly toxic. In order to reduce the problems caused by using such materials, isocyanate adducts are often used in place of the monomeric isocyanates. Both types have the advantage that the reaction will take place at room temperature. It is also possible to use blocked isocyanates. Isocyanates are blocked by reaction with a volatile hydroxy material in order to keep them from reacting with the hydroxy functionalized block polymer. The isocyanate is regenerated when heat is applied. This is described in the article referred to above. Such blocked isocyanates are useful, for example, in baked coatings. The material will be coated onto a substrate which will then be heated. The blocking agent will leave the coating under the influence of heat and crosslinking of the hydroxy functionalized block polymer will take place.

These polymers may also be crosslinked and cured with amino resins and anhydrides. For instance, see 50 Years of Amino Coating Resins, edited and written by Albert J. Kirsch, published in 1986 by American Cyanamid Company, which described in detail a whole series of amino resins which are useful in the present invention. It is stated therein on page 20 that the backbone polymers, i.e., the polymers which are to be crosslinked, "must contain one or more of the functional groups - hydroxy, carboxy, amide - listed above to be useful with amino resins". Anhydrides are used to cure OH groups in baked coatings (heating with phthalic anhydride, for example).

The polymers containing olefinic unsaturation or both aromatic and olefinic unsaturation, which are useful as the precursor polymers in the process according to the present invention, may be prepared using anionic initiators or polymerization catalysts. Such polymers may be prepared using bulk, solution or emulsion techniques. Polymers prepared in solution are preferred for subsequent partial hydrogenation.

The general methods of making block copolymers are reviewed by R.P. Quirk and J. Kim, "Recent Advances in Thermoplastic Elastomer Synthesis", Rubber Chemistry and Technology, volume 64 No. 3 (1991). Especially useful is the method of sequential anionic polymerization of monomers. Since the types of monomers that will undergo living polymerization are relatively limited for the anionic method, with the most favourable being conjugated diolefins and styrenes, partial hydrogenation of the anionic block copolymer is normally needed to attain the precursor, unepoxidized polymer. Polymers made by sequential polymerization of a suitable diolefin monomer and a monomer having only one carbon-carbon double bond or by sequential polymerization of two different mixtures (ratios) of such monomers, using either a monofunctional initiator, a monofunctional initiator and a coupling agent or a multifunctional initiator, may not have to be hydrogenated.

The polymers containing olefinic unsaturation or both aromatic and olefinic unsaturation may be prepared using anionic initiators or polymerization catalysts. Such polymers may be prepared using bulk, solution or emulsion techniques. Polymers prepared in solution are preferred for subsequent partial hydrogenation.

For instance, the precursor polymers suitable for preparing the polymers of formulas (V) and (VIII) may be conveniently prepared by anionic polymerization, preparing blocks A and B, and optionally arm C, consisting of homopolymers or copolymers of conjugated diene monomers or copolymers of conjugated diene monomers and vinyl aromatic monomers (75% or less vinyl aromatic monomer) wherein the monomers used for the A blocks are such that the A blocks have a greater number of 1,1 disubstituted, trisubstituted or tetrasubstituted olefinic unsaturation sites per unit of block mass than do the B blocks. The polymer may be partially hydrogenated with a suitable catalyst and conditions that favour the hydrogenation of the double bonds that are monosubstituted (vinyl) or 1,2 disubstituted (and also leaves aromatic double bonds intact), such that between 0.2 and 11.6 meq/g polymer of 1,1 disubstituted, trisubstituted or tetrasubstitued olefinic unsaturation sites are left intact. The B blocks, on average, will contain a lesser amount of olefinic double bonds. A special case is where A is a polyisoprene block, for which all of the residual double bonds are 1,1 disubstituted (3,4 isoprene repeat unit) or trisubstituted (1,4 isoprene repeat units), and B is a polybutadiene block, for which only monosubstituted (vinyl) or 1,2 disubstituted residual double bonds are present. Partial hydrogenation of this polymer works extremely well. When B is polybutadiene and this block is to react with a coupling agent, it is often convenient to use a miniblock of oligoisoprene or oligostyrene, to improve the consistency of the coupling process when making star polymers. The polymer can be epoxidized to provide 0.2 to 10 milliequivalents of epoxy per gram of A block, while the B blocks will contain a lesser amount of epoxy, due to epoxidation of residual 1,2 disubstituted olefin.

Another example would be the sequential polymerization of a single conjugated diene monomer under two sets of reaction conditions, such as the anionic polymerization of 1,3-butadiene in cyclohexane to produce 1,4-polybutadiene followed by addition of a structure modifier and an ether solvent and polymerization of high 1,2-polybutadiene, followed by coupling and selective hydrogenation of 1,2-polybutadiene to give A-B-A.

In another example, 1,1 disubstituted, trisubstituted and tetrasubstituted olefin sites can be randomly distributed among 1,2 disubstituted and vinyl olefin sites, for example, by copolymerizing butadiene and isoprene in the presence of a structure modifier and an ether solvent. Partial hydrogenation of such a polymer would allow the introduction of alcohol functionality at levels limited by the amount of the monomer that polymerizes to yield slower-hydrogenating olefin sites that was added to the polymerization feed.

In general, when solution anionic techniques are used, conjugated diene polymers and copolymers of conjugated dienes and vinyl aromatic hydrocarbons are prepared by contacting the monomer or monomers to be polymerized simultaneously or sequentially with an anionic polymerization initiator such as organo alkali metal compounds in a suitable solvent at a temperature within the range from -150 °C to 300 °C, preferably from 0 °C to 100 °C. Particularly effective anionic polymerization initiators are organo lithium compounds.

Conjugated dienes which may be polymerized anionically include those conjugated dienes containing from 4 to 24, preferably 4 to 8, carbon atoms such as 1,3-butadiene, isoprene, piperylene, methylpentadiene, phenylbuta-diene, 3,4-dimethyl-1,3-hexadiene, 4,5-diethyl-1,3-octadiene and the like. Isoprene and butadiene are the preferred conjugated diene monomers for use in the present invention because of their low cost and ready availability.

Vinyl aromatic hydrocarbons which may be copolymerized include vinyl aryl compounds such as styrene, various alkyl-substituted styrenes, alkoxy-substituted styrenes, vinyl naphthalene, alkyl-substituted vinyl naphthalenes and the like. Styrene is preferred.

Conjugated dienes can also be copolymerized with methacrylates, such as t-butyl methacrylate, as described in U.S. Patent 5,002,676, and such copolymers can be partially hydrogenated and epoxidized as described herein. The preferred use position for methacrylates, when used in the polymer, is in the C arms, such as indicated in formulas (V) and (VIII).

In general, any of the solvents known in the prior art to be useful in the preparation of such polymers may be used. Suitable solvents, then, include straight- and branched chain hydrocarbons such as pentane, hexane, heptane, octane and the like, as well as, alkyl-substituted derivatives thereof; cycloaliphatic hydrocarbons such as cyclopentane, cyclohexane, cycloheptane and the like, as well as alkyl-substituted derivatives thereof; aromatic and alkyl-substituted aromatic hydrocarbons such as benzene, naphthalene, toluene, xylene and the like; hydrogenated aromatic hydrocarbons such as tetralin, decalin and the like; linear and cyclic ethers such as methyl ether, methylethyl ether, diethyl ether, tetrahydrofuran and the like.

Most preferably, the polymers of the present invention are made by the anionic polymerization of conjugated diene monomers and vinyl aromatic hydrocarbon monomers in a hydrocarbon solvent at a temperature between 0 and 100 °C using an alkyl lithium initiator. The living polymer chains may be coupled by addition of divinyl monomer to form a star polymer. Additional monomers may or may not be added to grow more arms, C arms, or to terminally functionalize, such as with ethylene oxide or carbon dioxide to give hydroxyl or carboxyl groups, respectively, and the polymer and the living chain ends are quenched with a proton source. Polymerization may also be initiated from monomers such as m-divinylbenzene and m-diisopropenylbenzene treated with butyl lithium.

There are a wide variety of coupling agents or initiators that can be employed. Any polyfunctional coupling agent which contains at least two reactive sites can be employed. Examples of the types of compounds which can be used include the polyepoxides, polyisocyanates, polyimines, polyalde-hydes, polyketones, polyanhydrides, polyesters, polyhalides, and the like. These compounds can contain two or more types of functional groups such as the combination of epoxy and aldehyde groups, isocyanate and halide groups, and the like. Many suitable types of these polyfunctional compounds have been described e.g. in U.S. Patent Nos. 3,595,941; 3,468,972, 3,135,716; 3,078,254; 4,096,203 and 3,594,452. When the coupling agent has two reactive sites such as dibromoethane, the polymer will have a linear ABA structure. When the coupling agent has three or more reactive sites, such as silicon tetrachloride, the polymer will have a branched structure, such as (AB) ₙY with n being 3 or more and Y being the coupling agent residue. Coupling monomers are coupling agents where several monomer units are necessary for every chain end to be coupled. Divinylbenzene is the most commonly used coupling monomer and results in star polymers.

The polymers optionally may be partially hydrogenated. It may take place before or after epoxidation. Preparation of polymers which have controllable and predictable amounts of residual olefinic unsaturation is disclosed in U.S. 4,879,349.

It is likely that better performance will be achieved when the catalyst disclosed in U.S. 4,879,349 is replaced by a titanium catalyst such as is disclosed in U.S. 5,039,755.

In a preferred embodiment the polymers are partially hydrogenated prior to epoxidation and the A blocks contain a greater concentration of 1,1 disubstituted, 1,1,2 trisubstituted or tetrasubstituted olefinic double bonds (SDB) than the B blocks and the A blocks contain from 0.2 to 11.6 meq/g polymer of such double bonds, preferably within the range of 0.5 to 9 meq/g and most preferably to 0.1 to 5.4 meq/g. Preferably, the ratio of the concentration (meq/g) of such double bonds in A to the concentration in B should be greater than 3:1. More preferably, the ratio should be greater than 5:1 because it is generally valuable to confine functionality to blocks, particularly if it is desirable to maintain elastomeric properties after crosslinking. When the end use for the polymer is for pressure sensitive adhesives or flexible coatings, it is often useful for the B blocks to contain little or no SDB's. If polymerization placed greater amounts of double bonds in the A or B blocks, the polymer would have to be epoxidized to a greater extent to remove most of the double bonds. This leads to polymers that have water sensitivity in the A blocks, that over-crosslink, especially in the B blocks, have little elasticity and thus are unsuitable for the applications intended.

After partial hydrogenation, the glass transition temperature of polymers intended for pressure-sensitive applications should normally be less than 10 °C, preferably less than -15 °C and most preferably less than -40 °C. Polymers with higher Tg's in the A blocks are not as soft, while polymers with higher Tg's in the B blocks are not as elastomeric. Polymers with higher Tg's in the B block may be desirable for coatings, where tack is to be avoided.

Partial hydrogenation is diene selective. Generally, the rate of hydrogenation is much greater for carbon-carbon double bonds in which neither of the carbons is tertiary, as found in mono- and 1,2 disubstituted olefins, than for carbon-carbon double bonds in which one of the carbons is a tertiary carbon, as found in 1,1 di-, 1,1,2 tri- and tetrasubstituted olefins. The rate of epoxidation of carbon-carbon double bonds is just the opposite. Tertiary carbons promote epoxidation with peroxyacids better than secondary carbons, which in turn are better than primary carbons. Thus, the polymers described are especially suitable for the processes of partial hydrogenation or epoxidation and are especially suitable for the sequential use of both processes on the polymer. Use of partial hydrogenation alone on the present polymers preferentially leaves a greater number per unit of weight of residual diene double bonds in the A blocks of the polymers, while use of epoxidation alone produces a greater number of epoxidized diene monomers per unit of block weight in the A blocks than the B blocks. Epoxidation is also selective, favouring the disubstituted, trisubstituted and tetrasub-stituted olefins and the resulting epoxides are resistant to hydrogenation, so that saturated polymers can also be made by hydrogenation of the less substituted-olefins following epoxidation.

Regardless of the choice whether or not the polymer is to be hydrogenated, it must be epoxidized anyway such that at least 0.1 meq/g polymer of epoxy is in the polymer or there will be insufficient functionality to provide sufficient hydroxyl groups to provide the advantages of the invention. The preferred range is 0.1 to 5 meq/g and most preferred is 0.25 to 3 meq/g.

The epoxidized copolymers can be prepared by the epoxidation procedures as generally described or reviewed in the Encyclopedia of Chemical Technology 19, 3rd ed., 251-266 (1980), D. N. Schulz, S. R. Turner, and M. A. Golub, Rubber Chemistry and Technology, 5, 809 (1982), W-K. Huang, G-H. Hsuie, and W-H. Hou, Journal of Polymer Science, Part A: Polymer Chemistry, 26, 1867 (1988), K. A. Jorgensen, Chemical Reviews, 89, 431 (1989), and Hermann, Fischer and Marz, Angew. Chem. Int. Ed. Engl. 30 (No. 12), 1638 (1991).

For instance, epoxidation of the base polymer can be effected by reaction with organic peracids which can be preformed or formed in situ. Suitable preformed peracids include peracetic and perbenzoic acids. In situ formation may be accomplished by using hydrogen peroxide and a low molecular weight carboxylic acid such as formic acid. Alternatively, hydrogen peroxide in the presence of acetic acid or hydrogen peroxide in the presence of acetic anhydride and a cationic exchange resin will form a peracid. The cationic exchange resin can optionally be replaced by a strong acid such as sulphuric acid or p-toluenesulphonic acid. The epoxidation reaction can be conducted directly in the polymerization cement (polymer solution in which the polymer was polymerized) or, alternatively, the polymer can be redissolved in an inert solvent such as toluene, benzene, hexane, cyclohexane, methylene chloride and the like and epoxidation conducted in this new solution or the polymer can be epoxidized neat. Epoxidation temperatures on the order of 0 to 130°C and reaction times from 0.1 to 72 hours may be utilized. When employing hydrogen peroxide and acetic acid together with a catalyst such as sulphuric acid, the product can be a mixture of epoxide and hydroxy ester. The use of peroxide and formic acid in the presence of a strong acid may also result in diene polymer blocks containing both epoxide and hydroxy-ester groups. Due to these side reactions caused by the presence of an acid, it is preferable to carry out the epoxidation at the lowest possible temperature and for the shortest time consistent with the desired degree of epoxidation. Epoxidation may also be accomplished by treatment of the polymer with hydroperoxides or oxygen in the presence of transition metals such as Mo, W, Cr, V and Ag.

Epoxidized and optionally selectively hydrogenated polymers useful in the process of the present invention to manufacture the hydroxyl-containing polymers of the present invention are described in copending, commonly assigned U.S. Patent Applications Serial Nos. 629,839, filed April 29, 1991, and 722,172 filed October 7, 1991. Methods for making such polymers are described in detail in the above mentioned patent applications.

The last step of the process of the present invention involves contacting the epoxidized polymer with an alcohol having one unprotected hydroxyl group and either a compound of general formula MXₙ, wherein M is selected from the group consisting of hydrogen, boron, aluminium, iron and tin; X is a halogen; and n is an integer corresponding with the valence of M, or an organic complex thereof.

Preferably, the epoxidized polymer is contacted with an alcohol having one unprotected hydroxyl group in a solvent in the presence of a catalyst selected from the group consisting of Lewis acids of the formula MXₙ where M is a metal selected from the group consisting of boron, aluminium, iron and tin; X is a halogen, and n is an integer corresponding with the valence of the metal M, and organic complexes of such Lewis acids.

In this case, the preferred catalysts are organic complexes of boron trifluoride, the most preferred catalyst being boron trifluoride diethyl etherate, boron trifluoride dibutyl etherate, boron trifluoride dimethyl etherate and boron trifluoride t-butyl methyl etherate. It is preferred that the molar ratio of catalyst to epoxy be from 0.1:1 to 1:1, with the most preferred ratio being from 0.1 to 0.2 moles of catalyst per mole of epoxy functionality. If this ratio is too low, there will be no conversion. It is most preferred in carrying out the process that the catalyst be diluted to a concentration of 1 meq in 0.4 to 2.0 millilitres of solvent, the solvent preferably being the same solvent that is used in the reaction. It is also preferred that the catalyst solution be added relatively slowly; for example, on the order of 1 to 10 millilitres per minute to a reactor containing 1 lifter of a 10% by weight solution of epoxidized polymer in cyclohexane.

In a preferred embodiment of the present invention, the alcohol having one unprotected hydroxyl group is selected from monohydric alcohols, and derivatives of dihydric and trihydric alcohols having one unprotected hydroxyl and the remaining hydroxyl group(s) being protected as the acetal, ketal or carbonate. Monohydric alcohols include normal and secondary alcohols possessing from 1 to 10 carbons, most preferably n-butanol, n-propanol, n-pentanol, n-hexanol, n-heptanol and n-octanol. Derivatives of dihydric and trihydric alcohols having one unprotected hydroxyl and the remaining hydroxyls protected include acetals, ketals and carbonates of diols and triols and may have a structure like the following 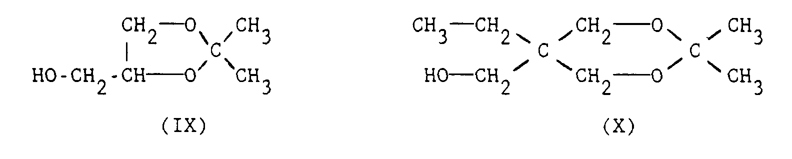 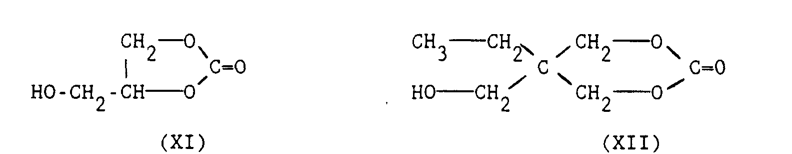 which are the formulas for Solketal (IX, the acetone ketal of glycerine) and trimethylolpropane ketal (X, the acetone ketal of trimethylolpropane) or the analogous carbonates (XI and XII). The preparation of other suitable partially protected polyols is described in Protective Groups in Organic Synthesis, 2nd Edition, by T. W. Green and P. G. M. Wuts, published in 1991 by J. Wiley and Sons of N.Y., N.Y.. The most preferred compounds for use herein include Solketal, butanol, trimethylolpropane ketal and octanol. It is preferred that the molar ratio of epoxy to this compound range from 1:2 to 1:30. A large excess of the compound is preferred to minimize crosslinking of the polymer. Thus, it is preferred that the epoxy to compound molar ratio be 1:15 to 1:25.

This reaction can be carried out at a temperature from 20°C to 200°C. The preferred range is from 25°C to 100°C. Lower temperatures will decrease the reaction rate and higher temperatures will promote side reactions, such as crosslinking and the formation of ketones or aldehydes. The process can be carried out for a period of from 15 minutes to 24 hours after the addition of the catalyst, but, in almost all cases, only 15 minutes (following the complete addition of catalyst solution) will be required to achieve adequate results.

A wide variety of solvents may be used including aliphatic and aromatic hydrocarbons, halogenated hydrocarbons and acyclic ethers. These solvents are compatible with the boron trifluoride catalysts. If other Lewis acid catalysts are used, it is possible that other solvents will be acceptable. Surprisingly, the derivatization can be carried out by adding the alcohol and Lewis acid catalyst (and optionally adding extra solvent to achieve the desired solids level) to an epoxidation cement (polymer in cyclohexane, for example), from which the acetic acid was removed by washing with aqueous base, followed by water. Lewis acid-catalyzed reactions are often sensitive to moisture and the solubility of water in cyclohexane is significant.

It is quite surprising that the ketal-protected di- and tri-hydric alcohols will react with the epoxidized polymers to produce soluble polymers. Acetal and ketal protecting groups are generally thought to be highly liable in the presence of boron trifluoride catalysts. This means that it would be expected that the alcohol would be rapidly regenerated in the presence of boron trifluoride. Residual epoxy groups would be expected to react with the resulting highly-reactive primary alcohol groups in the presence of boron trifluoride, resulting in crosslinking. An indication of this is provided in Protective Groups in Organic Synthesis, 2nd Edition by T. W. Greene and P. G. M. Wuts, published in 1991 by John Wiley & Sons Inc. of New York. Said reference discusses a typical acetal, methoxy methylene acetal, and shows at pages 411, 412, 421 and 423 that this material is highly reactive to boron trifluoride. Based on this table, one would predict that reactions involving Solketal and trimethylolpropane ketal would lead to crosslinking as discussed above. In fact, the ketal protecting groups are removed during the course of the reaction or work-up; the polymer-bound ketals are not isolated. For Solketal, this results in attachment of a residue possessing one primary and one secondary alcohol to the polymer backbone through an ether linkage. For trimethylolpropane ketal, both of the hydroxyl groups are primary. Surprisingly, no increase in side reactions that lead to coupling is observed when using Solketal or trimethylolpropane ketal over what is observed for monohydridic alcohols when reacted with the same epoxidized polymer at the same percent solids and epoxy:alcohol molar ratio.

In another preferred embodiment of the present invention, the last step of the process may be contacting the epoxidized polymer with an alcohol solution of hydrochloric acid.

It is preferred that this alcohol solution of hydrochloric acid be prepared by adding an aqueous solution of hydrochloric acid, for example 37% (by weight) aqueous hydrochloric acid (ACS Concentrated Reagent), to the alcohol such that from 0.01 to 1 gram of HCl will be present per gram of polymer. At least one equivalent of HCl must be present per equivalent of epoxy functionality. To ensure rapid reaction, it is most preferred that at least 5 moles of acid be present per mole of epoxy. It is further preferred that this acid solution be added to the alcohol in a 1:2 to 1:10, preferably 1:5 to 1:6, volume ratio because sufficient alcohol must be present to ensure reaction with the polymer in the organic phase. Suitable alcohols include 1 to 4 carbon alcohols such as methanol, ethanol, n-propanol, isopropanol, n-butanol and sec-butanol, with methanol being most preferred. More dilute hydrochloric acid solutions may be used to prepare the alcohol solution but too little acid will result in sluggish reactions, as will too high a ratio of water to alcohol in the reagent solution. Too high an acid concentration may result in side reactions leading to crosslinking. Gaseous hydrochloric acid may be used to prepare the alcohol reagent solution.

Suitable solvents include any solvent in which the polymer is soluble, however, hydrocarbon solvents (aromatic and aliphatic) are preferred, with cyclohexane being most preferred. The use of polar solvents, such as tetrahydrofuran, may lead to emulsion problems, since it is preferred that the residual acid be removed from the derivatized polymer cement by water washing. It is also preferred that the alcohol reagent solution be added to the polymer cement in ratio of about 1:1 to 1:10, preferably 1:5 to 1:6 because addition in this ratio assures that enough alcohol will be present to facilitate reaction with the polymer in the organic phase.

This reaction can be carried out at a temperature from 20 °C to 100 °C. The preferred range is from 25 °C to 50 °C. Lower temperatures will decrease the reaction rate and higher temperatures may result in side reactions, such as crosslinking. The maximum reaction temperature will also be limited by the boiling point of the alcohol. It is preferred that the reaction be carried out below the reflux temperature of the solution. The process can be carried out for a period of from 15 minutes to 24 hours after the addition of the HCl, but, in almost all cases, only 15 to 60 minutes (following the complete addition of HCl solution) will be required to achieve substantially complete hydrolysis.

The use of specifically hydrochloric acid is most preferred as it is the most practical mineral acid reagent capable of providing efficient hydrolysis under the preferred reaction conditions described above. Although perchloric acid may produce substantial hydrolysis, the hazards associated with its handling are undesirable. Reactions in which sulphuric acid is substituted for hydrochloric acid in this invention or for perchloric acid in the process of U.S. Patent No. 3,555,112 suffer from competitive crosslinking and soluble polymers containing substantial levels of alcohol functionality are not obtained. In addition, the acid catalyst is difficult to remove or neutralize, resulting in discoloration of the product when it is dried. Reactions employing strong organic acids, including alkyl and aryl sulphonic acids, suffer from similar problems. Other halogen acids, such as hydrobromic (HBr) or hydriodic (HI) acid, may effect reaction to high conversion, but even traces of these acids and their salts are known to impart colour to the product, especially when aged at elevated temperatures. This discoloration would be detrimental in many of the intended applications, especially in clear coatings.

A significant number of the alcohol - containing repeat units resulting from the process of this invention are expected to be chlorohydrins. One of X or X in formula (I) is Cl and the other is OH. Treatment with strong base may result in regeneration of the epoxide by dehydrohalogenation, but in most cases, the presence of chlorine adjacent to the hydroxyl group will not limit the utility of the product.

For both the hereinbefore discussed contacting with alcohol in the presence of a Lewis acid and with the alcohol solution of hydrochloric acid applies that the concentration of the epoxidized polymer in solution is important. It may range from as little as 1 percent up to 30 weight percent. Higher solids levels encourage the formation of coupled (dimeric, trimeric, etc.) polymers due to intermolecular reactions of epoxy groups. Lower levels, from 10 to 20 percent, are preferred, with 10% being most preferred, because this minimizes coupling. The increase in coupling with increasing solids is greatest for high molecular weight linear polymers but is less for star polymers possessing relatively short (3,000 to 10,000 molecular weight) arms.

The crosslinked materials prepared by the process of the present invention are useful in adhesives, sealants, coatings, films (such as those requiring heat and solvent resistance), etc. In addition to the hydroxy-functionalized polymer and any curing aids or agents, products formulated to meet performance requirements for particular applications may include various combinations of other ingredients, such as tackifying resins, plasticizers, fillers and stabilizers (e.g. antioxidants and UV inhibitors).

In many applications, especially in adhesives and sealants, it may be necessary to add an adhesion promoting or tackifying resin that is compatible with the rubbery midblock of the polymer. A common tackifying resin is a diene-olefin copolymer of piperylene and 2-methyl-2-butene having a softening point of 95 °C. This resin is available commercially under the tradename Wingtack 95 (Wingtack is a trade mark) and is prepared by the cationic polymerization of 60% piperylene, 10% isoprene, 5% cyclopentadiene, 15% 2-methyl-2-butene and about 10% dimer, as taught in U.S. Patent No. 3,577,398. Other tackifying resins may be employed wherein the resinous copolymer comprises 20-80 weight percent of piperylene and 80-20 weight percent of 2-methyl-2-butene. The resins normally have softening points (ring and ball) between 80°C and 115°C.

Other adhesion promoting resins which are also useful include hydrogenated rosins, esters of rosins, polyterpenes, terpenephenol resins and polymerized mixed olefins, lower softening point resins and liquid resins. Examples of low softening point or liquid resins include Adtac LV, Piccolastic A5, Piccovar AP10, and Piccolyte S25 resins from Hercules (Adtac, Piccolastic, Piccovar and Piccolyte are trade marks). To obtain good thermo-oxidative and colour stability, it is preferred that the tackifying resin be a saturated resin, e.g., a hydrogenated dicyclopentadiene resin such as Escorez 5000 series resin made by (Escorez is a trade mark) Exxon or a hydrogenated polystyrene or polyalphamethylstyrene resin such as Regalrez resin made by Hercules (Regalrez is a trade mark). The amount of adhesion promoting resin employed may vary from 10 to 400 parts by weight per hundred parts rubber (phr), preferably from 20 to 350 phr. The selection of the particular tackifying agent is, in large part, dependent upon the specific polymer employed in the respective adhesive composition.

Optionally, an arene-block-compatible resin may be employed. Compatibility is judged by the method disclosed in U.S. Pat. No. 3,917,607. Normally, the resin should have a softening point above 100°C, as determined by ASTM method E 28, using a ring and ball apparatus. Mixtures of arene block-compatible resins having high and low softening points may also be used. Useful resins include coumaroneindene resins, polystyrene resins, vinyl toluene-alphamethylstyrene copolymers, and polyindene resins. Much preferred is a coumarone-indene resin. The amount of arene-block-compatible resin may vary from 0 to 200 phr.

An adhesive composition may contain plasticizers, such as rubber extending plasticizers, or compounding oils. Rubber compounding oils are well-known in the art and include both high saturates content oils and high aromatics content oils. Preferred plasticizers are highly saturated oils, e.g. Tufflo 6056 and 6204 oil made by Lyondell and process oils, e.g. Shellflex 371 oil made by Shell (Tufflo and Shellflex are trade marks). Higher aromatic content oils include Tufflo. 11 and Shellflex. 212. The amounts of rubber compounding oil employed in the invention composition can vary from 0 to 500 phr, preferably 0 to 100 phr, and most preferably between 0 and 60 phr.

Various types of fillers and pigments can be included in the coating formulation. This is especially true for exterior coatings in which fillers are added not only to create the desired appeal but also to improve the performance of the coating such as its weatherability. A wide variety of fillers can be used. Suitable fillers include calcium carbonate, clays, talcs, zinc oxide, titanium dioxide and the like. The amount of filler usually is in the range of 0 to 70%w by weight based on the solvent free portion of the coating, depending on the type of filler used and the application for which the coating is intended. An especially preferred filler is titanium dioxide.

If the coating will be applied from solvent solution, the organic portion of the coating will be dissolved in a solvent or blend of solvents. Aromatic hydrocarbon solvents such as toluene, xylene, or Shell Cyclo Sol 53 are suitable. If desired, it is usually possible to obtain lower viscosity by using a solvent blend consisting of an aromatic hydrocarbon solvent with a polar solvent. Suitable polar solvents include esters such as isopropyl acetate, ketones such as methyl isobutyl ketone, and alcohols such as isopropyl alcohol. The amount of polar solvent used depends on the particular polar solvent chosen and on the level of functionality on the functionalized hydrogenated block copolymer. Usually, the amount of polar solvent used is from 0 to 50% by weight in the solvent blend.

Antioxidants and UV inhibitors can be added to the formulations to protect the products against degradation by oxidation or by exposure to sunlight during preparation and use of the compositions. Combinations of stabilizers are often more effective, due to the different mechanisms of degradation to which various polymers are subject.

The primary component of the antioxidant portion of the stabilizer package will be a hindered phenol type antioxidant. Examples of commercially available antioxidants of this type are ETHANOX 330, CYANOX 2246 and IRGANOX 1010 (Ethanox, Cyanox and Irganox are trade marks). A wide variety of secondary antioxidants and synergists can also be included in the formulation. Examples include zinc dialkyl dithiocarbamates such as BUTYL ZIMATE (Butyl Zimate is a trade mark), phosphite esters such as WESTIN 618 (Westin is a trade mark), and sulphur bearing compounds such as dilaurylthio-dipropionate, CYANOX LTDP (Cyanox Ltdp is a trade mark). Antioxidants are usually used in the formulation at concentrations from 0.05 to 5% by weight.

The UV inhibitor portion of the stabilizer package will usually be composed of a combination of a UV light absorbing type compound and a hindered amine light stabilizer. Typical absorbing type UV inhibitors include the benzophenone type such as CYASORB UV 531 (Cyasorb is a trade mark) and the benzotriazole type such as TINUVIN P and TINUVIN 328 (Tinuvin is a trade mark). Typical hindered amine light stabilizers include TINUVIN 770 and SANDUVOR 3056 (Sanduvor is a trade mark). UV inhibitors which contain a metal, such as the nickel containing UV inhibitor, CYASORB UV 1084 can also be used. These UV inhibitors will generally be included in the formulation at concentrations from 0.05 to 10% by weight.

Protective pigments and fillers can also improve the resistance to degradation by exposure to sunlight. Examples include carbon black, zinc oxide and titanium dioxide.

Compositions comprising the polymer prepared by the process of the present invention are typically prepared by blending the components at an elevated temperature, preferably between 50°C and 200°C, until a homogeneous blend is obtained, usually less than three (3) hours. Various methods of blending are known to the art and any method that produces a homogeneous blend is satisfactory. The resultant compositions may then preferably be used in a wide variety of applications. Alternatively, the ingredients may be blended into a solvent.

Adhesive compositions containing the polymers prepared by the process of the present invention may be utilized as many different kinds of adhesives, for example, laminating adhesives, contact adhesives, assembly adhesives, pressure sensitive adhesives, tie layers, hot melt adhesives, solvent borne adhesives and waterborne adhesives in which the water has been removed before curing. The adhesive can consist of simply the hydroxyl-functionalized polymer or, more commonly, a formulated composition containing a significant portion of the hydroxyl-functionalized polymer along with other known adhesive composition components, and, possibly, a crosslinking agent. The incor-poration of alcohols in epoxy formulations intended for cationic cure has been observed to increase the cure rate; a preferred composition for cationic cure contains both hydroxyl-functionalized and epoxidized polymer. Cationic cure may be initiated by E-beam radiation or UV light in the presence of appropriate photoinitiators or by thermally-activated initiators.

The invention is further illustrated by the following examples, however, without restricting the scope of the invention to these specific embodiments.

### EXAMPLE 1

Two different precursor polymers were used in this example. Polymer A was a linear unsaturated styrene-isoprene-styrene block copolymer having a peak molecular weight as determined by gel permeation chromatography of 160,000 and a polystyrene content of 15%.

Polymer B was prepared from an unsaturated linear styrene-(butadiene/isoprene)-styrene block copolymer in which about 1.5 meq/g of isoprene units were randomly distributed in the midblock and having a peak molecular weight of 50,000 and a styrene content of 30% by weight.

Polymer A was not hydrogenated at all but Polymer B was partially hydrogenated such that 1.2 Meq of olefinic double bonds remained in the polymer. The partial hydrogenation was carried out as follows: Polymer in cyclohexane was reacted with a catalyst prepared by reacting nickel 2-ethylhexanoate with triethyl aluminum (2.3 moles of Al per mole of Ni) and hydrogen at 34.5 bar (500 psi), at a temperature of 70 °C. 13 ppm of Ni (1.8 X 10⁻³ mole per gram of polymer), was used. The catalyst and residual lithium were washed out. Both polymers were epoxidized by reaction with peracetic acid at 45 °C; acid was added over 60 minutes, and then the solution was held at 45 °C for 6 hours. 1 Meq of peracetic acid per Meq of residual olefin in polymer B was added; one Meq of peracetic acid was added to polymer A for every Meq of epoxy desired in the final product. The acetic acid and residual peracetic acid were neutralized and the polymer solution was thoroughly washed with water. Epoxidized Polymer A contained 1.30 Meq epoxy per gram of polymer and epoxidized Polymer B contained 0.85 meq epoxy per gram of polymer.

To convert the epoxy to hydroxyl functionality, the polymers were dissolved at 10 weight percent in a mixture of toluene and alcohol (n-butanol or n-octanol). After purging with nitrogen, boron trifluoride diethyl etherate (0.15 mole per mole of epoxy) in 15-25 milliliters of toluene was added dropwise at room temperature. Exotherms of 2 to 3°C were observed. The solution was heated to 105°C for the desired reaction time (see Table 1).

When it was cooled, the polymer cement was washed with an excess (150 volume percent) of aqueous sodium carbonate and then water, precipitated into isopropanol and then dried under vacuum. Soluble products were isolated in all cases. Titration for residual epoxy was performed by the widely used method of adding a solution of tetraethyl ammonium bromide (TEABr) in acetic acid and titrating the acetate produced by reaction of the epoxy groups with standardized perchloric acid. The extent of conversion of epoxy groups to the ether-alcohol groups could be inferred from the decrease in epoxy functionality following reaction. ¹H NMR was also used to follow the reaction. ¹H NMR analysis of the unsaturated precursor of polymer B and the epoxidized product was used to determine the distribution of epoxidized-olefin structures in polymer B; 45% of the epoxy groups were derived from 1,4 isoprene repeat units, 30% from 3,4 isoprene repeat units, and 25% from 1,2 butadiene repeat units; essentially all of the unsaturation in the precursor to polymer A was due to 1,4 isoprene repeat units. The ¹H NMR spectra of the alcohol derivatives contained resonances due to protons alpha to hydroxyl and ether oxygen, resolved from resonances due to protons alpha to the epoxy oxygen. Using the known distribution of epoxidized repeat unit structures, it was possible to estimate the number of Meq of epoxy (E) units and ether-alcohol (DE) units, and thus, the extent of reaction. The extent of reaction (% Reaction) was determined by the following formula:100 x DE_{NMR}/Eᵢₙᵢₜᵢₐₗ, where Eᵢₙᵢₜᵢₐₗ is the epoxy content of the epoxidized precursor, as determined by ¹H NMR, and DE_{NMR} is the DE content of the derivatized polymer (all are measured in meq/g).

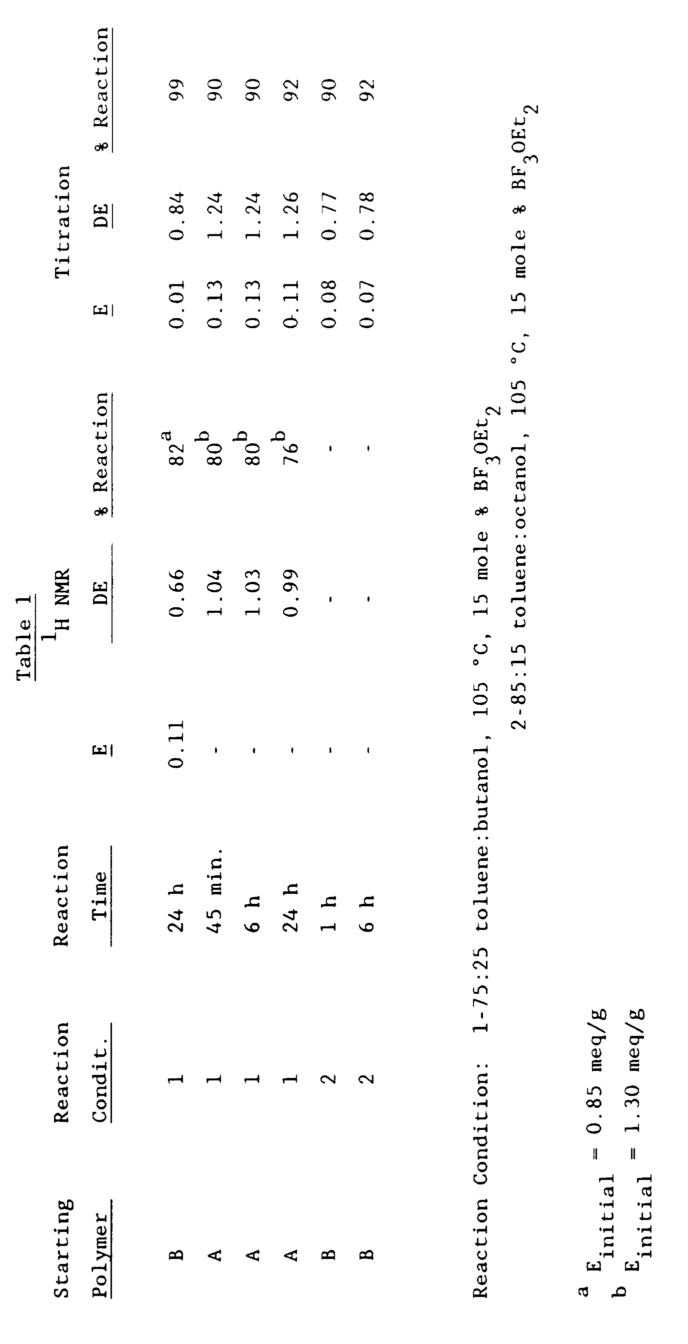

Polymer B was reacted with n-butanol or n-octanol as described above. A soluble white product was obtained and very little emulsification occurred during the workup in all instances. Titration and NMR revealed high conversion of epoxy units (E) to ether-alcohol (DE). The Fourier Transform Infrared (FTIR) spectrum exhibited the expected hydroxyl and ether bands. Little, if any, ketone or aldehyde functionality could be detected. Gel Permeation Chromatography (GPC) was used to look for changes in polymer molecular weight due to degradation or coupling (reaction between molecules to create dimers, trimers, etc.). There was no evidence of low molecular weight species (degradation), however, the derivatized polymers contained some 15-20% dimer, 8-10% trimer, 4-5% tetramer and 5-10% higher coupled products.

The reaction was repeated using Polymer A. Titration indicated extensive reaction of the epoxy groups in the first 45 minutes. The products became discolored for reaction times longer than 45 minutes and the 24 hour product was quite yellow. FTIR showed a decrease in the hydroxyl intensity relative to that of the ether band as the reaction time increased which is consistent with dehydration to give vinyl ether units. These results clearly demonstrate that shorter reaction times are more favourable for unsaturated epoxidized polymer substrates.

The ¹³C NMR spectrum of the Polymer A derivative exhibited resonances that are most consistent with ring opening of the 1,4-isoprene epoxy to give the least substituted secondary hydroxyl group. Based on this data, it appears that isoprene-derived epoxies open to give the most reactive (least substituted) hydroxyl functionality as shown in formula (I) in the Summary Section. Assuming that secondary alcohols are also produced in the reaction of Polymer B with butanol, the alcohol titration and ¹H NMR results indicate that about 30 relatively reactive secondary hydroxyl groups are introduced to each Polymer B molecule.

### EXAMPLE 2

In this example, the epoxidized versions of Polymers A and B were reacted with Solketal. 25 grams of polymer were dissolved to a 10% by weight solution in a mixture of toluene and Solketal, the reactor was purged with nitrogen and a solution of boron trifluoride diethyl etherate in 15 milliliters of toluene was added dropwise at room temperature. Exotherms of 3 to 4°C were observed. The solution was stirred at room temperature or heated for a period of time (see Table 2). The solution was then washed with an excess (150 volume percent) of aqueous sodium carbonate and then water, precipitated in isopropanol and then dried at 35-50°C under vacuum. Titrations for residual epoxy and ¹H NMR analysis were performed as described in Example 1. The titration data are summarized in Table 2.

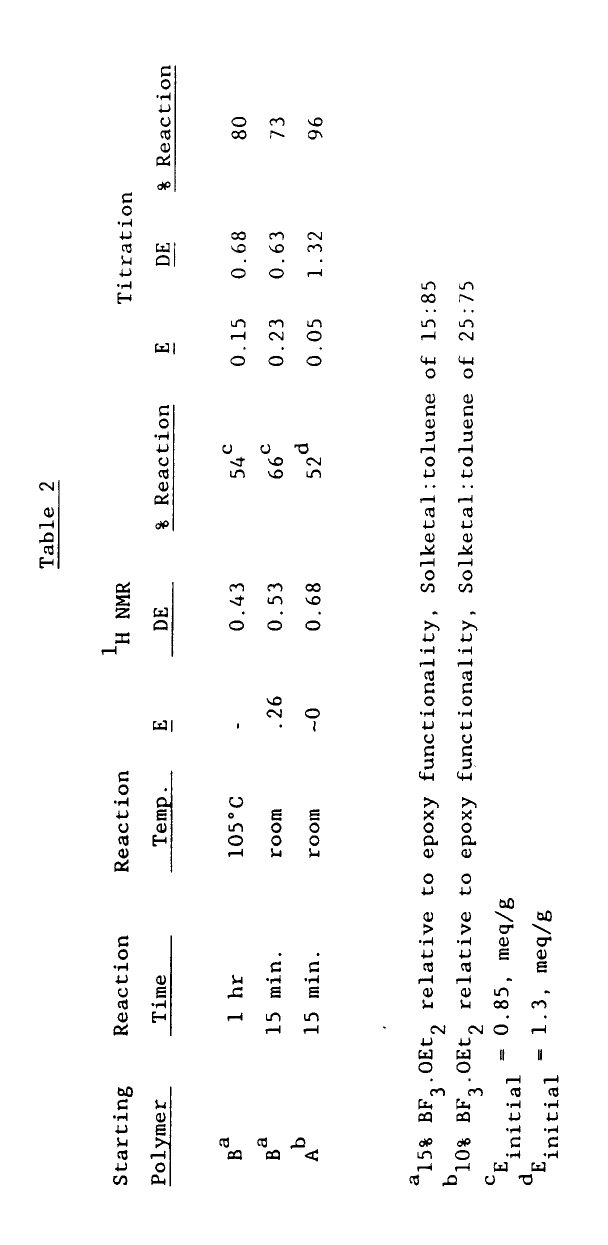

Temporarily masking the reactivity of a functional group through conversion to a derivative (protecting group) that is stable under a given set of conditions, yet easily converted to the original form under other conditions, is a common strategy in organic synthesis. Protection of two of the hydroxyl groups of a triol as a ketal resulted in a product that was found to react with epoxidized repeating units in the polymer as a monofunctional alcohol. Exposure to aqueous acid, for example, is expected to hydrolyze the ketal (deprotection) to the diol. For Solketal, this results in one primary and one secondary alcohol group.

In the first experiment, Polymer B was reacted with Solketal under conditions similar to those used in Example 1. After the catalyst was added, the reaction was heated to 105°C. Initially, no gel formation occurred and titration indicated nearly complete epoxy consumption. However, the polymer was discolored by heating and had a tendency to crosslink during storage. Later, it was determined that reaction with epoxy groups was essentially complete after catalyst addition at room temperature. The lower value for the number of DE units in the polymer prepared at 105°C, despite comparable epoxy consumption (by titration), suggests that some degradation of the ether-triol may occur at this temperature. The polymers prepared at room temperature were white and remained soluble. In all cases, the FTIR spectra of the reaction products exhibited bands characteristic of the ether-alcohol. The intensity of the hydroxyl band suggested the presence of more than one hydroxyl per repeat unit. Again, little, if any, evidence of ketone or aldehyde functionality was observed. Acid catalyzed hydrolysis in tetrahydrofuran resulted in no change in the spectrum. From this data, it can be concluded that deprotection takes place during the reaction or during product isolation. Ketal groups are reported to be labile in the presence of Lewis acids. The NMR and titration data suggest that the extent of conversion was comparable to that which was observed for reactions of Polymer B with the monohydridic alcohols of the previous example. This indicates that about 90 hydroxyl groups are introduced per molecule, at least 30 of which are highly reactive primary groups. Gel permeation chromatography (GPC) chromatograms of these materials were nearly identical to those of the monohydric alcohol derivatives; generation of the triol structure did not lead to increased coupling.

The experiment with Polymer A resulted in a soluble white product. The product obtained by reaction of this polymer at 105°C was insoluble. As with the Polymer B derivative, generation of the triol product did not lead to gelation The NMR and FTIR results were consistent with the expected ether-alcohol product. The low yield of derivatized (DE) units by ¹H NMR suggests that side reactions may have consumed some of the epoxy functionality.

The Solketal derivative of Polymer A was reacted with acetic anhydride in pyridine. FTIR spectroscopy of the product revealed substantial esterification, as would be expected if highly reactive primary hydroxyl groups are present. Reaction of the corresponding butanol derivative resulted in little esterification. Clearly, more reactive hydroxyl groups are introduced by reaction with Solketal than were introduced by reaction with butanol.

### EXAMPLE 3

This example reports the results of using the process of the present invention on a molecule which is specifically designed to meet coatings requirements. For coatings in which the polymer is expected to be a vehicle constituent rather than a modifier, the polymer should have a low viscosity (pourable at or near room temperature) and a high enough T to produce a relatively hard coating, as well as possess sufficient polarity to impart reasonable compatibility with relatively polar co-reagents, such as isocyanates for example, and solvents.

The polymer used in this example has the following structure

DVB[(EB)S-eI]ₙ

where DVB is divinylbenzene, the coupling agent, EB is polyethylene/butylene (hydrogenated polybutadiene), S is polystyrene, eI is epoxidized polyisoprene and n is 15-20. The arm molecular weight is approximately 5100. The arm consists of a 50/50 w/w EB/S random copolymer attached to the DVB core on one end and attached to a 500 MW polyisoprene block on the other end. The overall molecular weight of the star polymer is approximately 88,000.

This polymer was made by making a star polymer with butadiene/styrene-isoprene arms, partially hydrogenating the polymer as described above to fully hydrogenate the butadiene segments and partially hydrogenate the isoprene segments and then epoxidizing the polymer as described above to produce the above polymer which has 0.65 meq of epoxy groups in the isoprene segments. The polymer was reacted with alcohol and boron trifluoride diethyl etherate as described above. The reaction conditions are summarized in Table 3. The catalyst (in the solvent) was added dropwise to the polymer and Solketal solution at room temperature. Fifteen minutes after all of the catalyst was added, the polymer cement was washed with dilute aqueous base and then water. The majority of the solvent was removed by evaporation in a hood and the polymer was further dried under vacuum.

The epoxidized star polymer was initially reacted under the conditions that had been most effective for Polymer B, namely 10% solids and 85:15 toluene:Solketal at room temperature using boron trifluoride diethyl etherate as the catalyst. As expected, the analytical results were consistent with substantial conversion of epoxy groups to the ether-triol. Derivatization could also be accomplished by adding Solketal and catalyst to the washed cement (epoxidized polymer in the solvent in which it was epoxidized, usually cyclohexane). The dibutyl etherate was used as the catalyst since the diethyl etherate was insoluble in cyclohexane. There was no evidence of the residual water in the cement interfering with the reaction in any way.

Titration, ¹H NMR, FTIR and GPC were performed as described previously. Spectroscopic results consistent with conversion to the ether-triol were obtained. In addition, coupling, as determined by GPC, was dramatically decreased relative to the linear polymers of the previous example, prepared at the same solids level and Solketal:solvent ratio; only about 10-20% dimer is formed and little, if any higher coupled products. The extent of reaction indicates that about 1.5 derivatized repeat units (DE) are present per arm (22-30 per molecule), that is about 4.5 hydroxyl groups per arm (66-90 per molecule), at least 1/3 of which are primary.

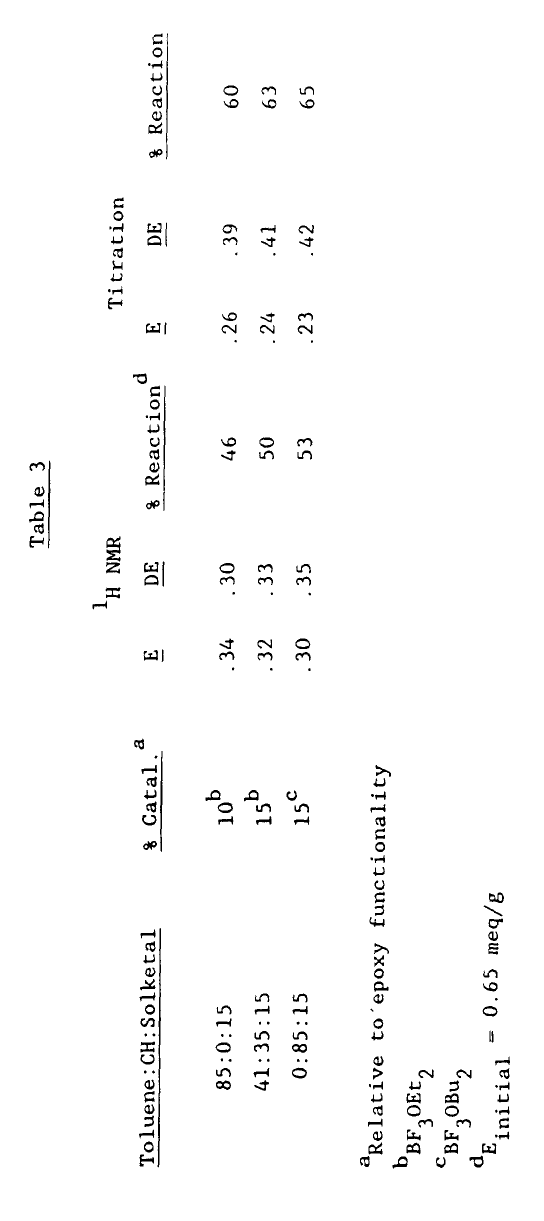

### EXAMPLE 4

In this example, Solketal derivatives of Polymer B and the star polymer of Example 3 (Polymer C) were cured with aromatic and aliphatic isocyanates to form polyurethane coatings. Coatings prepared from the star derivative exhibited good clarity and surface appearance and, although rather soft, possessed reasonable chemical resistance and adhesion.

These coatings were prepared by dissolving Polymer B (0.85 meq epoxy/g) and Polymer C (0.65 meq epoxy/g), reacted with Solketal and boron trifluoride diethyl etherate as described previously, to 20 weight percent in toluene. Then diphenyl methane diisocyanate (MONDUR M from Mobay) or isophorone diisocyanate (IPDI from Huls) was added, at a concentration of 1 meq per meq of epoxy in the starting polymer, to solutions of each polymer. 0.1 weight percent (relative to diisocyanate) of dibutyl tin dilaurate (BAYSILONE 162 from Mobay) was added with the IPDI as a catalyst. Thin films (2 mils) were then drawn onto glass and steel panels and thicker films (50 mils) were cast by pouring the solutions into release paper boats. A small amount of each solution was also cast onto a sodium chloride plate for FTIR. The films were allowed to dry at room temperature for two weeks, the first three types under ambient conditions and the FTIR samples in a desiccator, before any physical properties were measured. FTIR spectra were recorded after 1, 2, 4, 8 and 14 days. Films of the alcohol derivatives (no isocyanate) and films of the isocyanates with epoxidized Polymer B (no hydroxyl groups) were cast as controls.

All of the alcohol-containing polymers reacted with diisocyanates to form crosslinked networks but formation of a continuous network from the star polymer was slower. Samples of the formulations prepared from the Polymer B derivative left in bottles gelled overnight while those prepared from the star took at least a week to gel. None of the controls exhibited any viscosity increase. After two weeks, when samples of the films were placed in toluene, the isocyanate-cured alcohol derivatives swelled (about 50%) while maintaining their mechanical integrity, indicative of a tightly crosslinked network. All of the control samples dissolved completely.

The films prepared from the Polymer B derivative and cast onto glass exhibited high gloss, were tack free and felt somewhat harder than the uncured control, but suffered from "orange peel", as did the uncured control and the Polymer B (no hydroxy)-based coatings, a defect associated with poor wetting of the surface by the coating formulation. The MONDUR M-cured coating was somewhat hazy, indicative of poor compatibility with the highly aliphatic polymer. The corresponding film prepared from Polymer B (no hydroxy) was completely opaque.

The appearance of the coatings prepared from the star polymer (Polymer C) derivative was much better. Both of the coatings exhibited high gloss, no orange peel and were much harder and less tacky than the uncured control. The IPDI-cured coating was crystal clear, but slightly tacky, while the MONDOR M-cured coating was free of tack but slightly cloudy in thick sections. The polymer was completely compatible with the aliphatic isocyanate.

The films were evaluated for mechanical properties. The appearance was judged visually. The pencil scratch and gouge tests were performed according to the standard method of drawing successively harder pencil leads across the coating until it was scratched or gouged, respectively. The MEK (methyl ethyl ketone) rub cycles test was performed according to the standard method of drawing an MEK-moistened cloth across the coating for 100 cycles, or until breakthrough to the substrate occurred (one cycle equals one forward and one backward stroke). The results are shown in Table 4.

**Table 4**

| Polymer | Isocyanate | Appearance | Scratch | Pencil Hardness^{a} Gouge | MEK Rub Cycles |
|---|---|---|---|---|---|
| B | -- | op,g,c | F | H | - |
| B | MONDUR M | op,g,h | F | H | - |
| B | IPDI | op,g,c | B | HB | - |
| Star | -- | vt,c | F | H | 37 |
| Star | MONDUR M | sh,g | 2B | B | 100+ |
| Star | IPDI | c,g,t | F | H | 84 |
| B (no OH) | -- | op,g,c | F | H | - |
| B (no OH) | MONDUR M | op,o | F | H | - |
| B (no OH) | IPDI | op,sh | F | H | - |
| op = Orange Peel, g = High Gloss, h = Hazy, o = Opaque, c = Clear, t = Tacky vt = Very Tacky, sh = Slightly Hazy | | | | | |

| | | | | | |
|---|---|---|---|---|---|
| ^{a}hardness scale (softest to hardest) 6B<5B<4B<3B<2B<B<HB<F<H<2H<3H<4H<5H<6H | | | | | |

For the star polymer, a groove was quickly worn through the control (uncured) film in the MEK rub test, while both of the cured samples were fairly resistant. The sample cured with MONDUR M resisting over 100 rub cycles. The films of the Polymer B derivative pulled away from the substrate due to poor adhesion. As a result, meaningful MEK data could not be obtained.

Cure could also be followed by the evolution of the urethane carbonyl absorbance and corresponding decrease in isocyanate absorbance, using FTIR. These results suggest that cure was essentially complete for the aromatic isocyanate-cured coatings in less than 24 hours, while about 48 hours was required for the aliphatic isocyanate-cured coatings.

### EXAMPLE 5

The star polymer of Example 3 (polymer C) was reacted with n-butanol in toluene/cyclohexane at room temperature using boron trifluoride diethyl etherate, as described in Example 3, for the reaction with Solketal. Polymer C and Polymer B were also reacted with TMPK (acetone ketal of trimethylolpropane) at room temperature, as described for reaction with Solketal in Examples 2 and 3, respectively. Upon reaction with n-butanol, epoxidized repeat units are converted to the corresponding ether-alcohol, in which R = n-butyl and the only hydroxyl groups introduced are attached to the polymer backbone, primarily at secondary carbons. Reaction with TMPK introduces an R group possessing two primary hydroxyl groups, resulting in the corresponding ether-triol. Coupling, as determined by GPC, was comparable to what was reported for the corresponding derivatives of polymers B and C in previous examples. The reaction conditions and analytical results are summarized below.

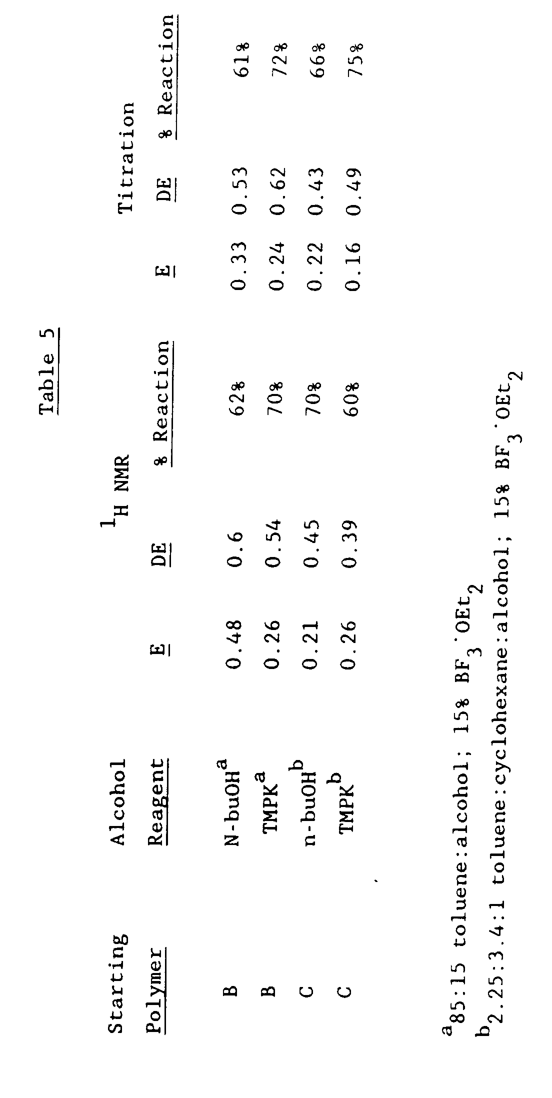

### EXAMPLE 6

In this example the butanol and TMPK derivatives of Example 5 were cured with aromatic and aliphatic isocyanates, as described in Example 4. All of the isocyanate-cured films were crosslinked (insoluble). While the MEK resistance was relatively low, improvement was observed relative to uncured controls. As in Example 4, films of Polymer B failed due to poor adhesion. None of the cured films were tacky, although the coatings were relatively soft. Reasonably good compatibility, resulting in clear films, was observed in most cases. For the coatings classed as "slightly hazy", the haziness was prominent only in thick sections. It is surprising that the butanol derivatives, lacking significant primary alcohol functionality, cured to form films with properties comparable to films prepared from primary alcohol-containing polymers. As the cost of reagents in the butanol derivatization is expected to be considerably lower, such products may be particularly important commercially. The properties of these coatings are summarized in Table 6, below.

**Table 6**

| Polymer (Alcohol) | Isocyanate | Appearance | Pencil Hardness^{a} Scratch | Gouge | MEK Rub Cycles |
|---|---|---|---|---|---|
| B (buOH) | --- | g,op,c | F | H | - |
| B (buOH) | Mondur M | sh,op,g | F | H | - |
| B (buOH) | IPDI | c,op,g | F | H | - |
| B (TMPK) | --- | g,c | F | H | - |
| B (TMPK) | Mondur M | c,g | F | H | - |
| B (TMPK) | IPDI | c,g | F | H | - |
| C (buOH) | --- | c,g,t | <4B | <4B | 9 |
| C (buOH) | Mondur M | c,g | F | H | 52 |
| C (buOH) | IPDI | c,g | F | H | 38 |
| C (TMPK) | --- | g,t,sh | 4B | 3B | 11 |
| C (TMPK) | Mondur M | sh,g | 2B | H | 39 |
| C (TMPK) | IPDI | sh,g | 2B | H | 45 |
| op = Orange Peel, g = High Gloss, h = Hazy, o = Opaque, c = Clear, t = Tacky vt = Very Tacky, sh = Slightly Hazy | | | | | |

| | | | | | |
|---|---|---|---|---|---|
| ^{a}hardness scale (softest to hardest) 6B<5B<4B<3B<2B<B<HB<F<H<2H<3H<4H<5H<6H | | | | | |

### EXAMPLE 7

10 grams of epoxidized polymer B as prepared in Example 1 were dissolved in 100 grams of cyclohexane. 24 mL of a solution consisting of a 5:1 volume ratio of methanol and concentrated HCl (37% aqueous, ACS Concentrated Reagent 0.17 g/g polymer) was added. The solution was stirred, either at room temperature or about 50°C for the desired time (15 minutes to 6 hours). Small samples for ¹H NMR and FTIR were taken after regular intervals. The reaction mixture was cooled and the cement was washed with water. The polymer was isolated by precipitation into isopropanol and then dried under vacuum at 50°C. A white, soluble product was obtained.

The analytical results are summarized in Table 7. Titration for residual epoxy was performed by the widely used method of adding a solution of tetraethyl ammonium bromide (TEABr) in acetic acid and titrating the acetate produced, by reaction of the epoxy groups, with standardized perchloric acid. The extent of conversion of epoxy groups to the alcohol groups could be inferred from the decrease in epoxy functionality following reaction. ¹H NMR revealed resonances identified as due to protons on the carbon containing the hydroxyl (H-C-OH) or chlorine (H-C-Cl) - the protons appear in the same region. Resonances due to epoxy were almost completely absent and calculations indicate about 96% reaction. ¹H NMR spectra of samples taken at 15 and 30 minutes reveal that the reaction was essentially complete in the first 15 minutes. The Fourier Transform Infrared (FTIR) spectra, as expected, exhibited intense resonances at 3450 cm⁻¹ (hydrogen bonded OH) and weaker bands at 3580 cm⁻¹ (monomeric OH) and at 1070 & 1030 cm⁻¹ (C-OH band). No new resonances in the C-Cl (800-600 cm ) region, indicative of the presence of chlorohydrin, could be identified. However, such resonances may be buried in an intense broad absorbence at about 750 cm⁻¹, present in the starting polymer. No ether C-O-C bands were observed. This evidence suggests that most, if not all, of the derivatized repeat units are diols (the product of adding water) or chlorohydrins (the product of adding HCl) and not ether-alcohols (the product of adding methanol). This evidence does not rule out the presence of some methoxy-alcohol repeat units. Washing with water alone or with acqueous sodium carbonate seemed to give the same structure.

Examination of Table 7 reveals that epoxy groups were consumed very rapidly and reaction appears to be essentially complete after 15 minutes at 50°C. These results are in contrast to the examples of US 3,555,112 where about 50% or more of the epoxy groups remained intact after 6 hours at 50°C.

**Table 7**

| Temp. | Time | ¹H NMR (meq/g) | | | Titration (meq/g) | | |
|---|---|---|---|---|---|---|---|
| | | E | DE | %Rxn^{a} | E | DE | %Rxn^{b} |
| room | 15 min. | .94 | .13 | 12 | - | - | - |
| room | 30 min. | .74 | .26 | 26 | - | - | - |
| room | 60 min. | .72 | .36 | 33 | - | - | - |
| room | 2 hrs. | .59 | .51 | 46 | - | - | - |
| room | 6 hrs. | .36 | .82 | 69 | .34 | .51 | 60 |
| 50°C | 15 min. | .04 | .94 | 96 | - | - | - |
| 50°C | 30 min. | <.01 | .95 | 100 | - | - | - |
| 50°C | 60 min. | <.01 | .92 | 100 | .04 | .81 | 95 |
| Initial Epoxy Concentrations (Eᵢₙₜ) = 0.85 meq/g | | | | | | | |

| | | | | | | | |
|---|---|---|---|---|---|---|---|
| ^{a} 100 X DE/(DE+E) | | | | | | | |
| ^{b} 100 X (Eᵢₙₜ - E)/Eᵢₙₜ | | | | | | | |

### EXAMPLE 8

The coupled polymer of Example 3 was hydrolyzed as described in Example 7. The analytical results are summarized in Table 8. As in example 7, the spectrascopic evidence was most consistent with hydrolysis of the epoxy groups to diols and/or addition of HCl to form chlorohydrin. The results summarized in Table 8 indicate that this polymer was more difficult to hydrolyze than the linear polymer of Example 7. However, it is clear that substantial conversion occurs in the preferred reaction time of one hour.

**Table 8**

| Temp. | Time | ¹H NMR (meq/g) | | | Titration (meq/g) | | |
|---|---|---|---|---|---|---|---|
| | | E^{c} | DE | %Rxn^{a} | E | DE | %Rxn^{b} |
| room | 15 min. | .51 | .15 | 23 | - | - | - |
| room | 30 min. | .44 | .22 | 33 | .33 | .33 | 50 |
| 50°C | 15 min. | .25 | .39 | 59 | - | - | - |
| 50°C | 30 min. | .21 | .44 | 67 | .09 | .57 | 86 |
| 50°C^{d} | 2 hrs. | .14 | .50 | 78 | .06 | .59 | 90 |
| Initial Epoxy Concentrations (Eᵢₙₜ) = 0.65 meq/g | | | | | | | |

| | | | | | | | |
|---|---|---|---|---|---|---|---|
| ^{a} 100 X DE/(DE+E) | | | | | | | |
| ^{b} 100 X (Eᵢₙₜ - E)/Eᵢₙₜ | | | | | | | |
| ^{c} E=.65-DE | | | | | | | |
| ^{d} 300 g of polymer | | | | | | | |

### COMPARATIVE EXAMPLE 1

In this example, 10 grams of the epoxidized polymer of Example 7 were dissolved in 100 grams of cyclohexane. 24 mL of a solution consisting of a 5:1 volume ratio of methanol and concentrated sulphuric acid (96% aqueous, ACS Concentrated Reagent) were added. The solution was stirred at room temperature for the 360 minutes. Small samples for NMR and FTIR were taken after 15, 30 and 60 minute intervals. The cement was washed with deionized water. The polymer was isolated by precipitation into isopropanol and then dried under vacuum at 50°C. The samples exhibited increasing crosslinking with reaction time. Samples taken during the first 60 minutes appeared to be in solution, but would not dissolve, only swell, after precipitation. The reaction mixture had set-up to form a loose gel by the time that 360 minutes had elapsed. When the polymer was dried overnight, discoloration was evident. Washing the cement with dilute aqueous sodium carbonate and then water, prior to precipitation had no effect on the product. Crosslinking and discoloration were still observed.

### COMPARATIVE EXAMPLE 2

The experiment described in comparative Example 1 was repeated using 37% (by weight) aqueous sulphuric acid in place of the concentrated reagent. A sample was taken after 15 minutes and the remaining product was isolated after 60 minutes. Gel formation was still evident, although the crosslinking appeared less extensive. The isopropanol precipitates were swollen in toluene and cast onto NaCl plates for FTIR. After drying at 40°C under vacuum, the spectra were recorded. In contrast to the results of the reaction with HCl, the FTIR spectra exhibited little evidence of reaction.

### COMPARATIVE EXAMPLE 3

Soluble alcohol derivatives of the polymer of Example 7 could be prepared using sulphuric acid and alkane and arene sulphonic acids if large amounts of water were present, as described in the examples in U.S. Patent No. 3,607,982, and very low acid levels (5 to 20 mole % of the epoxy groups) were used. The reactions were carried out as follows. 25 grams of the polymer of Example 7 was dissolved to a concentration of 10 wt% in a 25:75 volume ratio mixture of isopropanol and toluene. About 13 grams of water, followed by the desired amount of the acid catalyst (in 20 mL of isopropanol) was added and the reaction was heated with stirring at 50°C for the desired time. The polymers were isolated by precipitation into isopropanol, redissolved to 10 wt% in toluene and washed with dilute aqueous sodium carbonate, followed by water. The polymers were then precipitated in isopropanol and dried at 50°C under vacuum. The reaction conditions and results are summarized in Table 9.

Conversion, even after 5 hours, was very low when sulphuric acid was used as the catalyst. Higher levels of methanesulphonic acid (MSA) also gave substantial conversion only after very long reaction times. Higher conversions could be obtained using dodecylbenzene sulphonic acid (Cycat 600, purchased from American Cyanamid as a 72% wt. solution in isopropanol) (Cycat is a trade mark). However, this catalyst was very difficult to wash out of the polymer and residues often catalyzed crosslinking when the polymer was dried. Soluble polymer could be reliably obtained only by adding a sufficient quantity of a non-volatile base, such as diisopropanolamine, to neutralize the catalyst. The resulting salt could not be removed and constituted a significant percentage of the isolated product. At higher reaction temperatures, crosslinking, leading to gel formation, was competitive with hydrolysis. As a result, higher reaction temperatures were found to be undesirable.

**Table 9**

| Time | HA | [HA]^{a} | % hydrolysis^{b} |
|---|---|---|---|
| 5 hrs. | H₂SO₄ | 0.006 | 26 |
| 24 hrs. | MSA | 0.02 | 60 |
| 5 hrs. | Cycat 600 | 0.014 | 47 |
| 24 hrs. | Cycat 600 | 0.05 | 80 |

| | | | |
|---|---|---|---|
| ^{a} grams acid/gram polymer | | | |
| ^{b} by titration | | | |

### EXAMPLE 9

The HCl-hydrolyzed polymer of Example 8 was cured with an amino resin according to the following procedure. Polymer was mixed with a hexamethoxymethyl melamine (Cymel 303, American Cyanamid) and an arenesulphonic acid catalyst (Cycat 600, American Cyanamid) in a 90/10 mixture of xylene/n-butanol (Cymel is a trade mark). Compositions were prepared containing the amino resin at. about 4%, 9%, 16% and 28% of the total solids. 0.1 gram of catalyst was added for every gram of amino resin. About 0.01 to 0.05 mm (0.5 to 2 mil) films were drawn onto steel and aluminum panels and these were baked at 1) 150 °C for 20 minutes or 2) 200 °C for 10 minutes. Controls were prepared by casting films of the polymer and 1% (wt. solids) Cycat 600.

After baking, all of the melamine-cured films were clear, glossy and hard. Films baked at 200 °C were slightly yellow, while films baked at 150 °C were colourless. The control films were both quite coloured, soft, and tacky. Although formulations made with Cycat 600 alone and the melamine-containing formulations were completely crosslinked, it was clear that the properties of the films without melamine were substantially poorer.

Physical testing data for those films are summarized in Table 10. Scratch (S) and gouge (G) pencil hardness was determined using the standard method of drawing successively harder leads across the coating until it was scratched or gouged, respectively. The MEK (methyl ethyl ketone) rub test was performed according to the standard methold of drawing an MEK-moistened cloth across the coating 200 times, or until breakthrough to the substrate occurred. Crosshatch adhesion testing was performed according to the standard method of cutting a crosshatch pattern and contacting with a pressure sensitive tape. The amount of the coating lifted off determines the rating. Ratings are from 0-5 with 5 representing no coating lifted and 0 representing removal of greater than 65% of the coating.

As can be seen from Table 10, the hardness was very good, especially for coatings containing the highest level of the amino resins. The MEK rub test clearly shows that the extent of curing related to the melamine level. Highly cured (tightly crosslinked) coatings were obtained at the highest melamine level. Adhesion, in most cases, was less than optimal, but clearly better for the high-melamine formulations. Use of resins such as Cymel 1125 (which contains carboxylic acid functionality) or carboxylic acid-containing co-reagents may further improve adhesion. The coatings developed useful properties at well within the manufacturer's recommended levels of 15-30% melamine for general metal finishes. The hardness, clarity and gloss indicate that these materials have excellent potential in amino resin-cured coatings.

**Table 10**

| Melamine Level | Cure Schedule | Hardness^{a} | | MEK Rub | Crosshatch Adhesion |
|---|---|---|---|---|---|
| | | S | G | | |
| 3.8% | 1 | HB | F | 32 | 0 |
| 9.0% | 1 | F | H | 32 | 0 |
| 16.4% | 1 | F | H | 44 | 0 |
| 27.7% | 1 | H | 2H | 200⁺ | 1 |
| 3.8% | 2 | HB | F | 32 | 5 |
| 9.0% | 2 | H | 2H | 44 | 0 |
| 16.4% | 2 | F | H | 40 | 0 |
| 27.7% | 2 | 5H | 6H | 200⁺ | 5 |
| Cure Schedule 1) 150 °C, 20 min. 2) 200 °C, 10 min. | | | | | |

| | | | | | |
|---|---|---|---|---|---|
| ^{a} 6B < 5B < 4B < 3B < 2B < B < HB < F < H < 2H < 3H < 4H < 5H < 6H | | | | | |

## Claims

1. A process for making block polymers of conjugated dienes containing hydroxyl groups in the diene blocks, which process comprises the steps of:
(a) making a precursor polymer by polymerising at least one conjugated diene which leaves 1,2 disubstituted, 1,1 disubstituted, 1,1,2 trisubstituted or tetrasubstituted olefinic unsaturation in the polymer,
(b) epoxidizing said precursor polymer until the amount of epoxy functionality in the polymer is at least 0.1 meq/g polymer, and
(c) contacting the epoxidized polymer with an alcohol having one unprotected hydroxyl group and either HX or a compound or organic complex of MXn, wherein M is selected from the group consisting of boron, aluminium, iron and tin; X is a halogen; and n is an integer corresponding with the valence of the metal M.

2. A process as claimed in claim 1, wherein the alcohol having one unprotected hydroxyl group is an alcohol selected from the group of dihydric and trihydric alcohols, the remaining hydroxyls being protected as the acetal, ketal or carbonate.

3. The process of claim 1 or 2, wherein the catalyst which is an organic complex of MXn, is selected from the group consisting of boron trifluoride diethyl etherate, boron trifluoride t-butyl methyl etherate, boron trifluoride dibutyl etherate and boron trifluoride dimethyl etherate.

4. The process of claim 1, 2 or 3, wherein the molar ratio of catalyst MXn or an organic complex thereof, to epoxy in step (c) is from 0.1:1 to 1:1.

5. The process of any one of claims 1 to 4, wherein the catalyst MXn or an organic complex thereof is diluted to a concentration of 1 meq in 0.4 to 2.0 ml of solvent

6. The process of claim 1, wherein the alcohol having one unprotected hydroxyl group is selected from the group consisting of n-butanol, n-octanol, solketal and trimethylolpropane ketal.

7. The process of any one of claims 2 to 6, wherein the alcohol having one unprotected hydroxyl group is used in a molar ratio of epoxy to alcohol of from 1:15 to 1:25.

8. The process of any one of claims 2 to 7, wherein step (c) is carried out at a temperature of from 20 °C to 200 °C.

9. The process of any one of claims 2 to 8, wherein the concentration of polymer in step (c) is from 10 to 20 weight %.

10. The process of any one of claims 2 to 9, wherein the solvent in step (c) is selected from the group consisting of aliphatic and aromatic hydrocarbons, halogenated hydrocarbons and acyclic ether.

11. The process of claim 1, wherein in step (c) the epoxidized polymer is contacted with an alcohol solution of hydrochloric acid.

12. The process of claim 11, wherein from 0.01 to 1 gram of hydrochloric acid per gram of polymer is present in the solution in step (c).

13. the process of claim 11 or 12; wherein the molar ratio of acid to epoxy in step (c) is at least 5:1.

14. The process of any one of claims 11 to 13, wherein the reaction between epoxidized polymer and hydrochloric acid of step (c) is carried out at a temperature of from 20 °C to 100 °C.

15. The process of any one of claims 1 to 14, wherein the block copolymer is hydrogenated either after step (a) or after step (b), so that the epoxidized polymer contains less than 1 milliequivalent of residual olefin per gram of polymer.

## Patentansprüche

1. Verfahren zur Herstellung von Blockpolymeren von konjugierten Dienen mit einem Gehalt an Hydroxylgruppen in den Dienblöcken, welches Verfahren die folgenden Stufen umfaßt:
(a) Ausbilden eines Vorläuferpolymers durch Polymerisieren wenigstens eines konjugierten Diens, was eine 1,2-disubstituierte, 1,1-disubstituierte, 1,2,2-trisubstituierte oder tetrasubstituierte olefinische Unsättigung in dem Polymer beläßt,
(b) Epoxidieren dieses Vorläuferpolymers, bis die Menge an Epoxyfunktionalität in dem Polymer wenigstens 0,1 Milliäquivalent/g Polymer beträgt, und
(c) Inkontaktbringen des epoxidierten Polymers mit einem Alkohol, der eine ungeschützte Hydroxylgruppe aufweist, und entweder mit HX oder mit einer Verbindung oder einem organischen Komplex von MXₙ, worin M aus der aus Bor, Aluminium, Eisen und Zinn bestehenden Gruppe ausgewählt ist; X ein Halogen ist; und n eine ganze Zahl entsprechend der Wertigkeit des Metalles M ist.

2. Verfahren nach Anspruch 1, worin der Alkohol mit einer ungeschützten Hydroxylgruppe ein aus der Gruppe der zweiwertigen und dreiwertigen Alkohole ausgewählter Alkohol ist, wobei die restlichen Hydroxyle als das Acetal, Ketal oder Carbonat geschützt sind.

3. Verfahren nach Anspruch 1 oder 2, worin der Katalysator, der ein organischer Komplex von MXₙ ist, aus der aus Bortrifluoriddiethyletherat, Bortrifluorid-tert.-butylethyletherat, Bortrifluoriddibutyletherat und Bortrifluoriddimethyletherat bestehenden Gruppe ausgewählt ist.

4. Verfahren nach Anspruch 1, 2 oder 3, worin das Molverhältnis des Katalysators MXₙ oder eines organischen Komplexes hievon zu Epoxy in Stufe (c) von 0,1:1 bis 1:1 beträgt.

5. Verfahren nach einem der Ansprüche 1 bis 4, worin der Katalysator MXₙ oder ein organischer Komplex hievon in 0,4 bis 2,0 ml Lösungsmittel auf eine Konzentration von 1 Milliäquivalent verdünnt wird.

6. Verfahren nach Anspruch 1, worin der eine ungeschützte Hydroxylgruppe aufweisende Alkohol aus der aus n-Butanol, n-Octanol, Solketal und Trimethylolpropanketal ausgewählt ist.

7. Verfahren nach einem der Ansprüche 2 bis 6, worin der eine ungeschützte Hydroxylgruppe aufweisende Alkohol in einem Molverhältnis Epoxy zu Alkohol von 1:15 bis 1:25 verwendet wird.

8. Verfahren nach einem der Ansprüche 2 bis 7, worin die Stufe (c) bei einer Temperatur von 20°C bis 200°C ausgeführt wird.

9. Verfahren nach einem der Ansprüche 2 bis 8, worin die Polymerkonzentration in Stufe (c) von 10 bis 20 Gew.-% beträgt.

10. Verfahren nach einem der Ansprüche 2 bis 9, worin das Lösungsmittel in Stufe (c) aus der aus aliphatischen und aromatischen Kohlenwasserstoffen, halogenierten Kohlenwasserstoffen und acyclischen Ethern bestehenden Gruppe ausgewählt wird.

11. Verfahren nach Anspruch 1, worin in Stufe (c) das epoxidierte Polymer mit einer Alkohollösung von Chlorwasserstoffsäure in Kontakt gebracht wird.

12. Verfahren nach Anspruch 11, worin von 0,01 bis 1 g Chlorwasserstoffsäure pro Gramm Polymer in der Lösung in Stufe (c) zugegen sind.

13. Verfahren nach Anspruch 11 oder 12, worin das Molverhältnis von Säure zu Epoxy in Stufe (c) wenigstens 5:1 beträgt.

14. Verfahren nach einem der Ansprüche 11 bis 13, worin die Umsetzung zwischen epoxidiertem Polymer und Chlorwasserstoffsäure von Stufe (c) bei einer Temperatur von 20°C bis 100°C ausgeführt wird.

15. Verfahren nach einem der Ansprüche 1 bis 14, worin das Blockcopolymer entweder nach Stufe (a) oder nach Stufe (b) hydriert wird, sodaß das epoxidierte Polymer weniger als 1 Milliäquivalent restliches Olefin pro Gramm Polymer enthält.

## Revendications

1. Procédé de fabrication de polymères blocs de diènes conjugués contenant des groupes hydroxyle dans les blocs de diène, lequel procédé comprend les étapes suivantes :
(a) la fabrication d'un polymère précurseur par polymérisation d'au moins un diène conjugué qui laisse une insaturation oléfinique 1,2-disubstituée, 1,1-disubstituée, 1,1,2-trisubstituée ou tétrasubstituée dans le polymère,
(b) l'époxydation du polymère précurseur précité jusqu'à ce que la quantité de fonctionnalité époxy dans le polymère soit d'au moins 0,1 méq/g de polymère, et
(c) la mise en contact du polymère époxydé avec un alcool comportant un groupe hydroxyle non protégé et soit HX, soit un composé ou complexe organique de MXn, dans lequel M est choisi dans le groupe comprenant le bore, l'aluminium, le fer et l'étain, X est un halogène, et n est un nombre entier correspondant à la valence du métal M.

2. Procédé suivant la revendication 1, dans lequel l'alcool comportant un groupe hydroxyle non protégé est un alcool choisi dans le groupe comprenant les alcools dihydriques et trihydriques, les hydroxyles restant étant protégés sous la forme d'acétal, de cétal ou de carbonate.

3. Procédé suivant l'une ou l'autre des revendications 1 et 2, dans lequel le catalyseur qui est un complexe organique de MXn est choisi dans le groupe comprenant le diéthyl éthérate de trifluorure de bore, le t-butyl méthyl éthérate de trifluorure de bore, le dibutyl éthérate de trifluorure de bore et le diméthyl éthérate de trifluorure de bore.

4. Procédé suivant l'une quelconque des revendications 1, 2 et 3, dans lequel le rapport molaire de catalyseur MXn ou d'un complexe organique de celui-ci à l'époxy dans l'étape (c) est de 0,1/1 à 1/1.

5. Procédé suivant l'une quelconque des revendications 1 à 4, dans lequel le catalyseur MXn ou un complexe organique de celui-ci est dilué à une concentration de 1 méq dans 0,4 à 2,0 ml de solvant.

6. Procédé suivant la revendication 1, dans lequel l'alcool comportant un groupe hydroxyle non protégé est choisi dans le groupe comprenant le n-butanol, le n-octanol, le solcétal et le triméthylolpropane cétal.

7. Procédé suivant l'une quelconque des revendications 2 à 6, dans lequel l'alcool comportant un groupe hydroxyle non protégé est utilisé dans un rapport molaire d'époxy à alcool de 1/15 à 1/25.

8. Procédé suivant l'une quelconque des revendications 2 à 7, dans lequel l'étape (c) est réalisée à une température de 20°C à 200°C.

9. Procédé suivant l'une quelconque des revendications 2 à 8, dans lequel la concentration de polymère dans l'étape (c) est de 10 à 20% en poids.

10. Procédé suivant l'une quelconque des revendications 2 à 9, dans lequel le solvant dans l'étape (c) est choisi dans le groupe comprenant les hydrocarbures aliphatiques et aromatiques, les hydrocarbures halogénés et l'éther acyclique.

11. Procédé suivant la revendication 1, dans lequel dans l'étape (c) le polymère époxydé est mis en contact avec une solution alcoolique d'acide chlorhydrique.

12. Procédé suivant la revendication 11, dans lequel de 0,01 à 1 g d'acide chlorhydrique par gramme de polymère est présent dans la solution dans l'étape (c).

13. Procédé suivant l'une ou l'autre des revendications 11 et 12, dans lequel le rapport molaire de l'acide à l'époxy dans l'étape (c) est d'au moins 5/1.

14. Procédé suivant l'une quelconque des revendications 11 à 13, dans lequel la réaction entre le polymère époxydé et l'acide chlorhydrique de l'étape (c) est réalisée à une température de 20°C à 100°C.

15. Procédé suivant l'une quelconque des revendications 1 à 14, dans lequel le copolymère bloc est hydrogéné après l'étape (a) ou après l'étape (b), de telle sorte que le polymère époxydé contienne moins de 1 milliéquivalent d'oléfine résiduelle par gramme dé polymère.
